(19) Europäisches Patentamt
European Patent Office
Office européen des brevets

(11) EP 1 531 405 B1

# (12) EUROPEAN PATENT SPECIFICATION

(45) Date of publication and mention of the grant of the patent:
**17.01.2007 Bulletin 2007/03**

(51) Int Cl.:
***G06F 17/30*** *(2006.01)*

(21) Application number: **04026919.3**

(22) Date of filing: **12.11.2004**

## (54) Information search apparatus, information search method, and information recording medium on which information search program is recorded

Vorrichtung zur Informationssuche, Verfahren zur Informationssuche und Aufzeichnungsmedium zur Speicherung des Informationssuchprogramms

Appareil de recherche d'information, méthode pour la recherche d'information, et mémoire sur laquelle le programme de recherche d'information est enregistré

(84) Designated Contracting States:
**DE FR GB**

(30) Priority: **14.11.2003 JP 2003385714**
**11.11.2004 JP 2004327334**

(43) Date of publication of application:
**18.05.2005 Bulletin 2005/20**

(73) Proprietor: **Pioneer Corporation**
**Tokyo-to (JP)**

(72) Inventors:
- **Kodama, Yasuteru, c/o Pioneer Corporation Tsurugashima-shi Saitama-ken (JP)**
- **Suzuki, Yasunori, c/o Pioneer Corporation Tsurugashima-shi Saitama-ken (JP)**
- **Shioda, Takehiko, c/o Pioneer Corporation Tsurugashima-shi Saitama-ken (JP)**
- **Odagawa, Satoshi, c/o Pioneer Corporation Tsurugashima-shi Saitama-ken (JP)**
- **Arakawa, Katsunori, c/o Pioneer Corporation Tsurugashima-shi Saitama-ken (JP)**

(74) Representative: **Reinhard - Skuhra - Weise & Partner**
**Postfach 44 01 51**
**80750 München (DE)**

(56) References cited:
**EP-A- 1 178 411**
**EP-A- 1 304 628**
**WO-A2-01/11496**
**US-A- 5 739 451**
**US-A- 5 903 892**
**US-A1- 2002 159 640**

- **PATENT ABSTRACTS OF JAPAN vol. 2003, no. 09, 3 September 2003 (2003-09-03) & JP 2003 131674 A (MEGAFUSION CORP), 9 May 2003 (2003-05-09)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 531 405 B1

## Description

BACKGROUND OF THE INVENTION

1. Field of the Invention

The present invention relates to an information search apparatus, an information search method, and an information recording medium on which an information search program is computer-readably recorded, and more particularly to a song search apparatus and a song search method in which one song or a plurality of songs comprised of lyrics and performances (prelude, accompaniment, interlude, and postlude; hereinafter, prelude, accompaniment, interlude, and postlude' referred to as 'performance') are searched, and an information recording medium on which a song search program is computer-readably recorded.

2. Related Art

Recently, digital data for reproducing a plurality of songs are stored by an onboard navigation apparatus or a home server apparatus or the like, and favorite songs among them are selected and reproduced.

At this time, in prior arts, as a first song search method, it is common that part of constituent words (phrases) constituting lyrics included in a song to be reproduced is inputted as it is and the song having lyrics including the constituent words is searched and reproduced.

Further, US 2003 078919 A1 (FIGs. 1 to 3) discloses a second song search method reflecting subjective feeling of a user, There is a search method for preparing a sensitivity table which can be updated with a correlation value between a search keyword (for example, cheerful music or refreshing music) and a feature word (for example, cheerfulness or energetic), preparing each feature word list representing '1' and '0' depending on whether or not there is a feature related to the feature word, and searching a plurality of matched songs on the basis of the sensitivity table and the feature word list when the user inputs a desired search keyword.

In addition, document EP 1 304 628 discloses an information selecting apparatus suitably used to select music pieces in an audio apparatus in correspondence with the respective personal sensitivities. When a desirable one retrieval keyword is entered by a user, the selecting means selects at least one of the plurality of contents information on the basis of the sensitivity table and the feature word list. The sensitivity table includes a plurality of correlative values between the plurality of feature words and a plurality of retrieval keywords. The feature word list contains a plurality of index values of a plurality of feature words previously set. That is, EP 1 304 628 discloses that music pieces are selected on the basis of the literal features of the inputted keyword.

However, according to the above-mentioned conventional song search methods, there are the following prevalent problems. First, in the first song search method, there is a problem in that different search routines are performed for search words which are closely related to each other such as 'coast', 'waterside', and 'beach', respectively, and that an entirely different songs are searched for each of the words constituting lyrics in some cases. In addition, the search process is not efficient.

On the other hand, according to the second song search method, there is a problem in that appropriate songs are not searched since the sensitivity table is used with respect to only a search keyword inputted by a user and thus the correlation to the song to be searched is not taken into consideration.

SUMMARY OF THE INVENTION

Accordingly, the present invention is made in consideration of the above-mentioned problems, and an object of the present invention is to provide a song search apparatus and a song search method in which songs matched with the subjective feeling of a user can be quickly searched, a program for searching song, and an information recording medium in which the program for searching song is recorded.

The present invention will be described below. Although reference numerals in the accompanying drawings will be accessorily written as parenthetic numerals for descriptive convenience, the present invention is not limited to the illustrated features.

The above object of the present invention is achieved by the apparatus of claim 1, method of claim 10 and recording medium of claim 11.

The above object of the present invention can be achieved by an information search apparatus (S) which searches one or plural songs among a plurality of songs comprised of lyrics and performances. The information search apparatus (S) is provided with: a song feature information storing device (3) which distinguishably stores song feature information comprised of constituent word information which indicates contents of a plurality of constituent words included in the song, and first sound feature information which indicates the sound feature of the performance included in the song, for every song; a search word input device (9) which is used to input a search word representing the song to be searched; a search word feature information storing device (4) which distinguishably stores, as search word feature information characterizing an inputted search word, the search word feature information comprised of first lyric feature information, which is a collection of weighted constituent words obtained by applying a weight value to each constituent word constituting the lyrics included in any one of the songs to be searched by using the search word, and second sound feature information which indicates sound feature of the performance included in any one of the songs to be searched by using the search word, for every search word; a comparison device (8) which compares input search word feature information as the search word feature information corresponding to the inputted search word with each of the stored first sound feature information; and an extracting device (8) which extracts songs to have the best similarity to the input search word feature information, as the songs corresponding to the inputted search word, based on the comparison result of the comparison device (8).

The above object of the present invention can be achieved by an information search method which searches one or plural songs among a plurality of songs comprised of lyrics and performances. The information search method is provided with: a search word input process in which a search word indicating a song to be searched is inputted; a comparison process in which, as input search word feature information characterizing an inputted search word, the input search word feature information comprised of first lyric feature information, which is a collection of weighted constituent words obtained by applying a weight value to each of the constituent words constituting the lyrics included in any one of the songs to be searched by using the inputted search word, and second sound feature information, which indicates sound feature of the performance included in any one of the songs to be searched by using the inputted search word, is compared with a plurality of entities of the first sound feature information which indicates the sound feature of the song included in each of the songs; and an extracting process in which songs to have the best similarity to the input search word feature information are extracted, as the songs which are appropriate for the inputted search word, based on the comparison result of the comparison process.

The above object of the present invention can be achieved by an information recording medium on which an information search program is recorded so as to be readable through a computer which is included in an information search apparatus (S) which searches one or plural songs among a plurality of songs comprised of lyrics and performances with a pre-installed re-writable recording medium. The information search program causes the computer to function as: a song feature information storing device (3) which distinguishably stores song feature information comprised of constituent word information that represents contents of a plurality of constituent words included in the song and first sound feature information which indicates the sound feature of the performance included in the song, for every song; a search word input device (9) which is used to input a search word representing the song to be searched; a search word feature information storing device (4) which distinguishably stores, as search word feature information characterizing an inputted search word, the search word feature information comprised of first lyric feature information which is a collection of weighted constituent words obtained by applying a weight value to each constituent word constituting the lyrics included in any one of the songs to be searched by using a corresponding search word and second sound feature information indicating the sound feature of the performance included in any one of the songs to be searched by using the corresponding search word, for every search word; a comparison device (8) which compares input search word feature information as the search word feature information corresponding to the inputted search word with each entity of the stored first sound feature information; and an extracting device (8) which extracts the songs to have the best similarity to the input search word feature information, as the songs appropriate for the inputted search word, based on the comparison result of the comparison device (8).

BRIEF DESCRIPTION OF THE DRAWINGS

FIG. 1 is a block diagram showing a schematic configuration of a song search apparatus related to an embodiment of the present invention;

FIG. 2 illustrates the data structure of the information stored in the song search apparatus related to the embodiment, wherein FIG. 2A illustrates the data structure of song feature information, FIG. 2B illustrates the data structure of search word feature information, and FIG. 2C illustrates the order of performing when all modifications are simultaneously performed;

FIG. 3 is a flow chart showing a song search process related to the embodiment;

FIG. 4 illustrates a conversion table related to the embodiment;

FIG. 5 illustrates the data structure of history information related to the embodiment, wherein FIG. 5A illustrates a data structure of matching history information and FIG. 5B illustrates a data structure of non-matching history information;

FIG. 6 is a flow chart showing in detail a process of updating the conversion table;

FIG. 7 illustrates a specific example (I) of the process of updating the conversion table; and
FIG. 8 illustrates a concrete example (II) of the process of updating the conversion table.

DESCRIPTION OF THE PREFERRED EMBODIMENTS

Hereinafter, best embodiments of the present invention will now be described with reference to the drawings. Also, the below-mentioned embodiment is a case in which the present invention is applied to a song search apparatus for storing a plurality of songs and searching and outputting (reproducing) any one of songs according to a request of a user.

(I) Overall configuration and whole operation

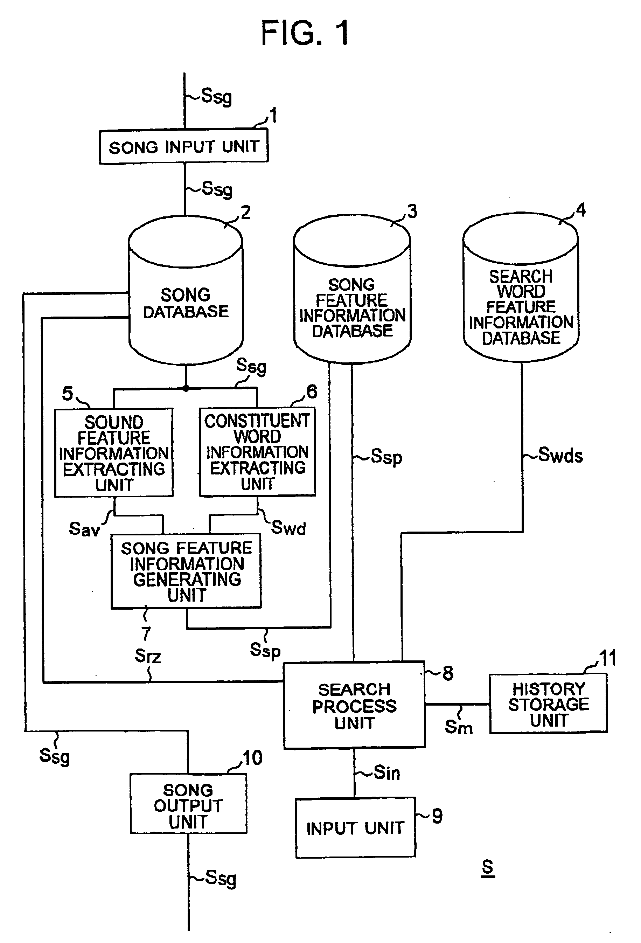

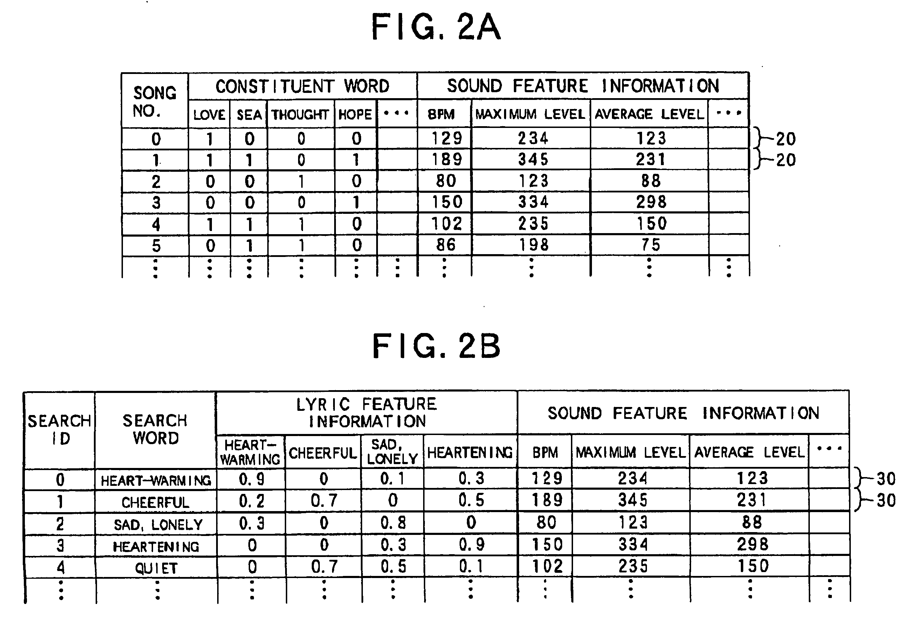

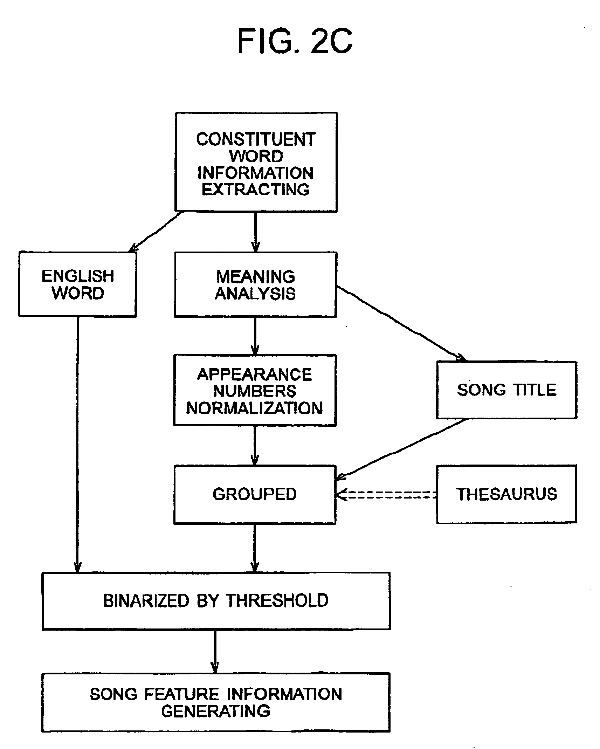

First, the overall configuration and the whole operation of the song search apparatus according to the present embodiment will be explained with reference to FIGs. 1 and 2. In addition, FIG. 1 is a block diagram showing the schematic configuration of the song search apparatus, and FIG. 2 illustrates the data structure of information accumulated in the song search apparatus.
As shown in FIG. 1, the song search apparatus S according to the present embodiment comprises a song input unit 1, a song database 2 as a song storing device, a song feature information database 3 as a song feature information storing device, a search word feature information database 4 as a search word feature information storing device, a sound feature information extracting unit 5, a constituent word information extracting unit 6, a song feature information generating unit 7, a search process unit 8 as a comparison device, an extracting device, a lyric feature information generating device, a table updating device, and a search word feature information updating device, an input unit 9 as a search word input device, an evaluation information input device, a song output unit 10, and a history storage unit 11.
At this time, in the song database 2, a plurality of songs are accumulated and stored as an object to be searched by the below-mentioned song search process. Further, each of the songs is comprised of at least lyrics and a performance including prelude, accompaniment, interlude, and postlude.
Here, a song which is desired to be accumulated is inputted into the song database 2, when song information Ssg corresponding to the song is inputted into the song input unit 1 from the outside, by performing the format conversion process etc. for storing the song information Ssg in the song database 2 at the song input unit 1 to input the processed song information Ssg into the song database 2.
Next, the song feature information database 3 is accumulated with song feature information corresponding to all the songs accumulated in the song database 2 such that the song feature information can be identified with respect to each of the songs.
Here, the song feature information is accumulated in the song feature information database 3 such that it corresponds to each of all the songs accumulated in the song database 2, and is the information characterizing the respective lyrics and performance of each of the songs.
Next, the song feature information will be explained with reference to FIGs. 1 and 2A.
When a new song is inputted into the song database 2 as song information Ssg, the song feature information is newly generated in accordance with the song and the generated song feature information is newly registered and accumulated in the song feature information database 3.
Here, when a new song is accumulated in the song database 2, the song information Ssg corresponding to the song is read from the song database 2 and is outputted to the sound feature information extracting unit 5 and the constituent word information extracting unit 6, as shown in FIG. 1.
Further, a plurality of parameters representing the sound feature of the song are extracted from the song information Ssg and are outputted to the song feature information generating unit 7 as sound feature information Sav by the sound feature information extracting unit 5.
At this time, as the plurality of parameters included in the sound feature information Sav, there are, as shown in the right side of FIG. 2A, for example, a speed (BPM (Beet Per Minutes)) of the song, a maximum output level of the song (maximum sound volume), an average output level of the song (average sound volume), a code included in the song, a beat level of the song (that is, the signal level (magnitude) of the beat component of the song), and the key of the song (C major or A minor).
In parallel to the above, the constituent word information extracting unit 6 extracts lyrics (words of the song) included in the song from the song information Ssg, searches whether or not the constituent words (phrases, hereinafter referred to simply as constituent words) set previously in the extracted lyrics are included, generates the constituent word feature information swd for each of the constituent words indicating the search result (regarding whether or not the constituent words are included in the lyrics), and outputs them to the song feature information generating unit 7.
At this time, the constituent word feature information Swd shows whether or not the constituent words set previously such as 'love', 'sea', 'thought', or 'hope' are included in lyrics constituting a song. When the constituent word is included in the lyrics, the value of the constituent word feature information Swd for the constituent word is defined to be '1', and, when the constituent word is not included in the lyrics, the value of the constituent word feature information Swd for the constituent word is defined to be '0'. More specifically, for example, as shown in the left side of FIG. 2A, the song having the song number '0' in the song database 2 includes the constituent word 'love', but does not include the constituent words 'sea', 'thought', and 'hope'.

Thereby, the song feature information generating unit 7 combines the sound feature information Sav and the corresponding constituent word feature information Swd for every song, outputs the song feature information Ssp composed of a plurality of entities of song feature information 20 corresponding to each of the songs to the song feature information database 3, as shown in FIG. 2A, and registers and accumulates it in the song feature information database 3. At this time, as shown in FIG. 2A, the song feature information 20 of one song is comprised of the sound feature extracted from the song by the sound feature information extracting unit 5 and the constituent word information extracted from the lyrics of the song by the constituent word information extracting unit 6.

In addition, the search word feature information corresponding to the whole search words previously set as search keywords (that is, the search keywords subjectively characterizing the song which a user wants to listen to at that time, hereinafter, referred to simply as the search words) inputted by the user in the below-mentioned song search process is distinguishably accumulated in the search word feature information database 4 for each of the search words.

Here, the search word feature information must be selected and inputted when a user searches songs from the songs accumulated in the song database 2, and it is the information characterizing each of the search words inputted by the user.

In the above embodiment, the constituent word information extracting unit 6 searches whether or not the constituent words set previously in the lyrics extracted from the song information Ssg, generates the constituent word feature information Swd for each of the constituent words, and outputs them to the song feature information generating unit 7. However, the constituent word feature information Swd can be generated in other modified ways as follows: More specifically, in the case that images of a constitution word can be changeable by its adjacent modifier, the meanings of the constitution word can be analyzed in consideration of the changed images, and the constituent word feature information Swd can be generated. In addition, on the basis of the normalized appearance numbers obtained by dividing the appearance numbers of the constitution word in one song with the length of the whole lyrics, the constituent word feature information Swd can be generated. Further, on the basis of a constitution word used in a title of a song, the constituent word feature information Swd can be generated. In this case, the constitution words of the song title can be assigned different weights to from ones to constitution words of lyrics in a song. Furthermore, by getting constitution words grouped by use of a thesaurus database (not shown), the constituent word feature information Swd can be generated on the basis of appearance numbers of each group to which a constitution word belongs. When lyrics in a song contain constitution words in different languages (such as English, French, German, Spanish, and Japanese), the constituent word feature information Swd can be generated on the basis of appearance numbers of each of the constitution words in the different language. Further, in the above-mentioned explanation, depending on whether or not the constituent words set previously are included in lyrics constituting a song, the value of the constituent word feature information Swd for the constituent word is defined to be '1' or '0', or binarized. However, the appearance numbers of the constituent words in a song are counted. When the counted appearance numbers are equal to or over a predetermined threshold, the value of the constituent word feature information Swd for the constituent word can be defined to be '1', and when the counted appearance numbers are less than the threshold, the value of the constituent word feature information Swd can be defined to be '0'. These modifications of generating the constituent word feature information can be performed independently each other and can be simultaneously performed together with all modifications. When all modifications are simultaneously performed, these modifications are performed in an order shown in FIG. 2C.

Next, the search word feature information will be explained with reference to FIG. 2B in detail.

As shown in FIG. 2B, one entity of search word feature information 30 comprises search word feature information identifying information (shown by 'search ID' in FIG. 2B) for identifying each of the search word feature information 30 from other entities of the search word feature information 30, a search word itself corresponding to the search word feature information 30, lyric feature information characterizing lyrics included in a song to be searched and extracted (in other words, expected to be searched and extracted) from the song database 2 by using the corresponding search word, and sound feature information including the plurality of parameters representing the sound feature of the song to be searched and extracted.

Here, the sound feature information constituting the search word feature information 30 specifically includes sound parameters similar to those parameters included in the sound feature information Sav.

Also, similarly, the lyric feature information constituting the search word feature information 30 is a collection composed by applying a weight value to each of the plurality of subjective pieces of the lyric feature information characterizing the lyrics included in the song to be searched and extracted by using the search word feature information 30, according to the specific content of the respective lyrics included in the song to be searched and extracted by using the search word corresponding to the search word feature information 30.

More specifically, as shown in FIG. 2B, with respect to the search word feature information 30 corresponding to the search word ’heart-warming’, the lyric feature information of ’heart-warming’ is formed with the weight value of 0.9 against the other lyric feature information, the lyric feature information of ’heartening’ is formed with the weight value of 0.3 against the other lyric feature information, the lyric feature information of ’sad, lonely’ is formed with the weight value of 0.1 against the other lyric feature information, and the lyric feature information of ’cheerful’ is formed with the weight value of 0 against the other lyric feature information. On the other hand, with respect to the search word feature information 30 corresponding to the search word of ’cheerful’, the lyric feature information of ’cheerful’ is formed with the weight value of 0.7 against the other lyric feature information, the lyric feature information of ’heart-warming’ is formed with the weight value of 0.2 against the other lyric feature information, the lyric feature information of ’heartening’ is formed with the weight value of 0.5 against the other lyric feature information, and the lyric feature information of ’sad, lonely’ is formed with the weight value of 0 against the other lyric feature information. Also, with respect to the search word feature information 30 corresponding to the search word of ’sad, lonely’, the lyric feature information of ’heart-warming’ is formed with the weight value of 0.3 against the other lyric feature information, the lyric feature information of ’sad, lonely’ is formed with the weight value of 0.8 against the other lyric feature information, and the lyric feature information of ’cheerful’ and ’heartening’ is formed with the weight value of 0 against the other lyric feature information. Further, with respect to the search word feature information 30 corresponding to the search word of ’heartening’ or ’quiet’, each of the lyric feature information of ’heart-warming’, ’cheerful’, ’sad, lonely’ and ’heartening’ is formed with a predetermined weight value.

Moreover, as mentioned below, in order to obtain the search result of favorite songs of a user, the same subjective concept as the subjective concept represented by each of the lyric feature information is represented by any one of the search words. Also, each of the lyric feature information itself represents the feature of the songs (more specifically, the lyrics included in the song) accumulated in the song database 2 but is independent from the search word itself. The detailed description thereof will be mentioned below.

Also, in case a user subjectively searches a desired song by using the information accumulated in the song feature information database 3 and the search word feature information database 4, after any search word is inputted at the input unit 9 by the user, input information Sin representing the inputted search word is outputted to the search process unit 8.

Thereby, the search process unit 8 extracts one entity of the search word feature information 30 corresponding to the inputted search word from the search word feature information database 4 as search word feature information Swds on the basis of the input information Sin, and simultaneously extracts a plurality of entities of the song feature information 20 corresponding to the entire songs accumulated in the song database 2 from the song feature information database 3 as song feature information Ssp. Then, the extracted entity of the search word feature information 30 is compared with those of the song feature information 20, and song identifying information Srz representing the songs corresponding to the entities of the song feature information 20 which have the best similarity to the entity of the search word feature information 30 are generated and outputted to the song database 2.

Thereby, the song database 2 outputs the song represented by the song identifying information Srz to the song output unit 10 as song information Ssg.

Then, the song output unit 10 performs an output interface process etc. needed for the output song information Ssg and outputs the processed song information Ssg to an external amplifier unit or a broadcasting unit or the like (not shown).

Also, after the song information Ssg representing one song is outputted from the song output unit 10, evaluation information regarding whether or not the song corresponding to the outputted song information Ssg is appropriate for a song required by a user who initially inputs a search word, is again inputted into the input unit 9, and the corresponding input information Sin is outputted to the search process unit 8.

Thereby, the search process unit 8 generates history information representing the result of the past song search process on the basis of the evaluation information inputted as the input information Sin, and temporarily stores history information Sm in the history storage unit 11 and reads out it if necessary to perform the below-mentioned history managing process.

(II) Song search process

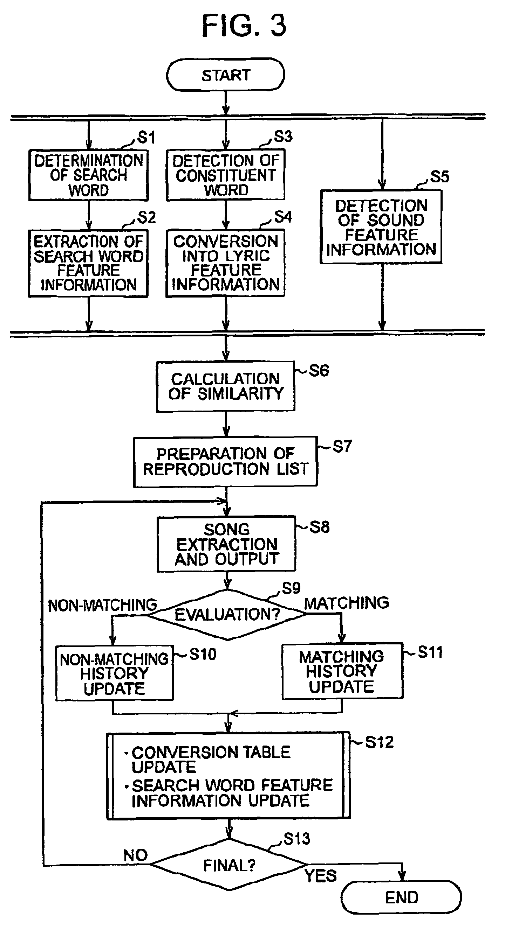

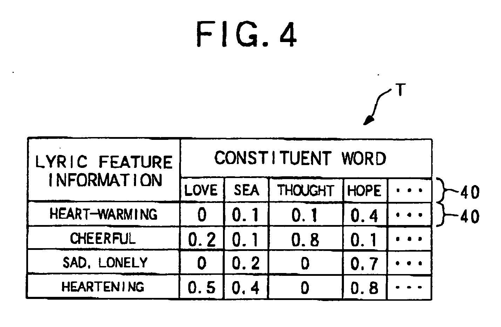

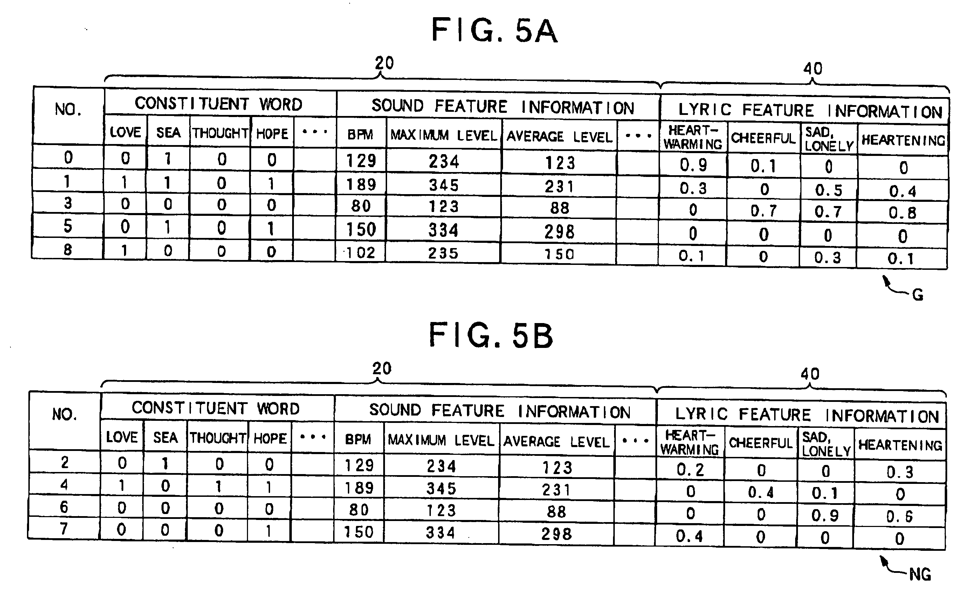

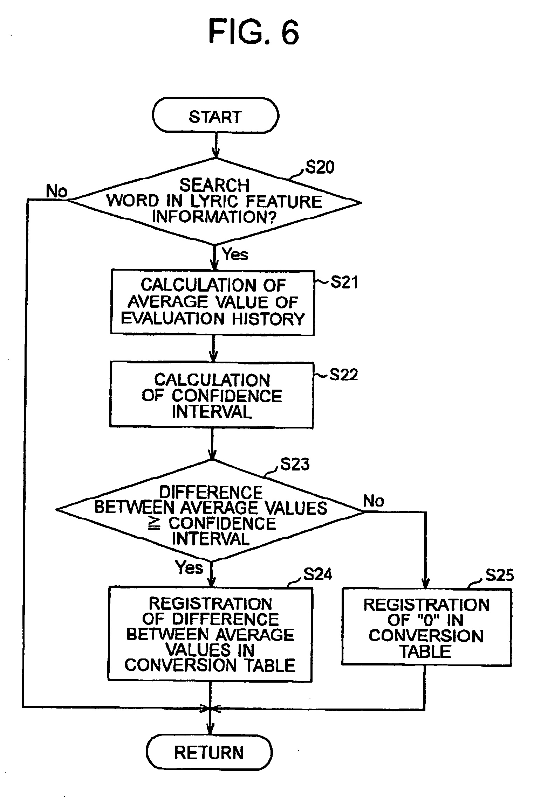

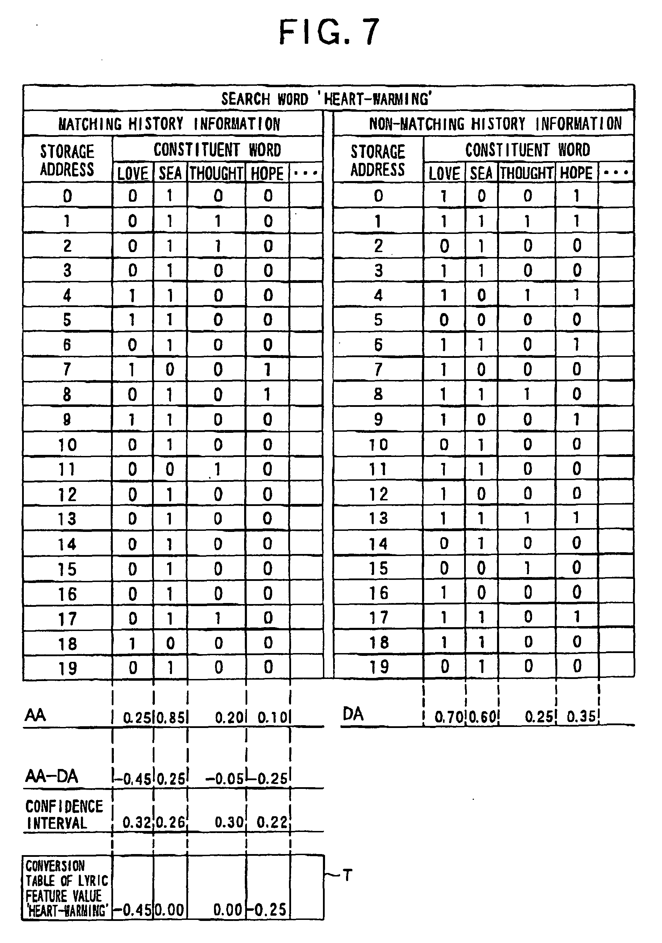

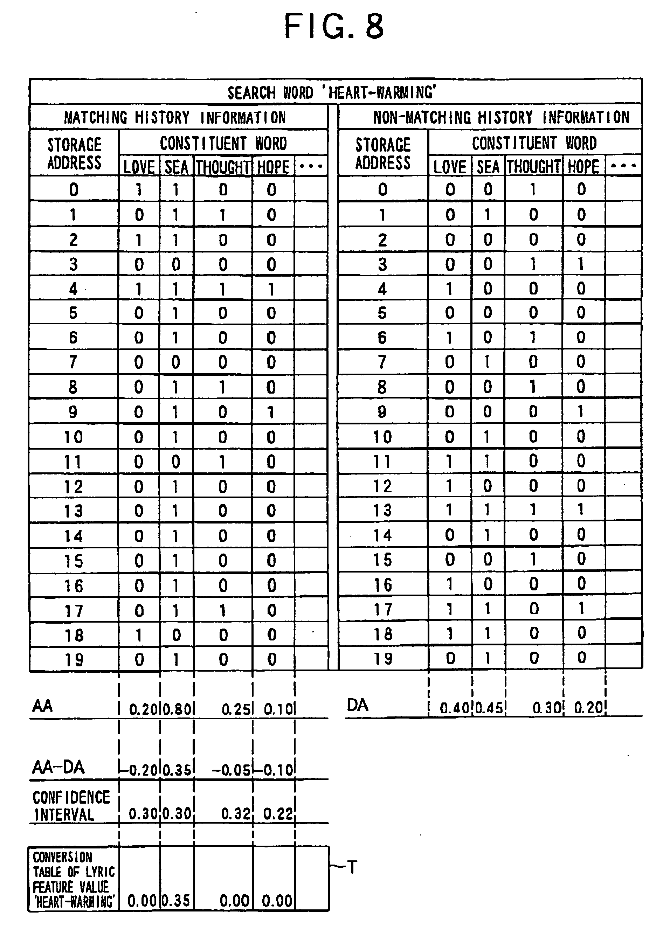

Next, the song search process related to the embodiment performed by using the song search apparatus S comprising the above-mentioned configuration will be explained with reference to FIGS. 3 to 8 in detail. In addition, FIG. 3 is a flow chart showing the song search process in the song search apparatus, FIG. 4 illustrates the content of a conversion table used in the song search process, FIG. 5 illustrates the history information used in the history process related to the embodiment, FIG. 6 is a flow chart showing the history managing process of the history information, and FIGS. 7 and 8 illustrate databases used in the history managing process.

As shown in FIG. 3, in the song search process performed on the basis of the search process unit 8, when a desired subjective search word is initially determined and inputted by a user into the input unit 9 (step S1), the entity of the search word feature information 30 corresponding to the inputted search word is extracted from the search word feature information database 4 and is outputted to the search process unit 8 (step S2).

In addition, in parallel with the process of the steps S1 and S2, for every song, the constituent words constituting the lyrics included in the entire songs are read from the song feature information database 3 and then outputted to the search process unit 8 (step S3). Then, for every song, the search process unit 8 performs the process for converting the constituent words into the lyric feature information corresponding to the lyric included in each song by using the conversion table stored in the memory (not shown) in the search process unit 8 (step S4).

Here, the conversion table will be explained with reference to FIG. 4 in detail.

The lyric feature information generated by the process of the step S4 is identical to the lyric feature information with the weight values included in the search word feature information 30, and is a collection composed by applying the weight value to each of the constituent words constituting the lyrics included in the song according to the specific content of each lyric feature information, for every song corresponding to the lyric feature information.

More specifically, in the example of the conversion table T shown in FIG. 4, with respect to lyric feature information 40 of 'heart-warming', the constituent word of 'hope' is formed with the weight value of 0.4 against the other constituent words, the constituent words of 'sea' and 'thought' are formed with the weight value of 0.1 against the other constituent words, the constituent word of 'love' is formed with the weight value of 0 against the other constituent words, and thus the lyric feature information of 'heart-warming' is generated. With respect to the lyric feature information 40 of 'cheerful', the constituent word of 'thought' is formed with the weight value of 0.8 against the other constituent words, the constituent word of 'love' is formed with the weight value of 0.2 against the other constituent words, and the constituent words of 'sea' and 'hope' are formed with the weight value of 0.1 against the other constituent words. With respect to the lyric feature information 40 of 'sad, lonely', the constituent word of 'hope' is formed with the weight value of 0.7 against the other constituent words, the constituent word of 'sea' is formed with the weight value of 0.2 against the other constituent words, the constituent words of 'love' and 'thought' are formed with the weight value of 0 against the other constituent words, and thus the lyric feature information 40 of 'sad, lonely' is generated. Finally, with respect to the lyric feature information 40 of 'heartening', the constituent word of 'hope' is formed with the weight value of 0.8 against the other constituent words, the constituent word of 'sea' is formed with the weight value of 0.4 against the other constituent words, the constituent word of 'love' is formed with the weight value of 0.5 against the other constituent words, the constituent word of 'thought' is formed with the weight value of 0 against the other constituent words and thus the lyric feature information of 'heartening' is generated.

In addition, in the process of the step S4, the corresponding lyric feature information 40 is generated from each constituent word of the song by using the conversion table T shown in FIG. 4. More specifically, for example, in the case of using the conversion table T shown in FIG. 4, when any song includes only the constituent words 'sea', 'thought', and 'hope' among the constituent words in the conversion table T, the value of the lyric feature information 40 of 'heart-warming' for the song becomes 0.6 by adding the values 0.1, 0.1, and 0.4 which are the weight values of the constituent words 'sea', 'thought' and 'hope' in the lyric feature information of 'heart-warming', respectively. Similarly, the value of the lyric feature information 40 of 'cheerful' for the song becomes 1.0 by adding the values 0.1, 0.8, and 0.1 which are the weight values of the constituent words 'sea', 'thought' and 'hope' in the lyric feature information of 'cheerful', respectively. Similarly, with respect to each lyric feature information 40 listed in the conversion table T, each value of the song is determined by adding the weight values corresponding to each constituent word.

In parallel with the processes of the steps S1, 52, S3, and S4, only the sound feature information in each of the song feature information 20 corresponding to the entire songs is read from the song feature information database 3 and is outputted to the search process unit 8 (step S5).

Based on these, in the search process unit 8, for every song, the lyric feature information included in one entity of the search word feature information 30 (including the weight values of the lyric feature information 40) extracted at the step S2 is compared with the entity of the lyric feature information 40 corresponding to each song converted at the step S4, and the sound feature information included in the search word feature information 30 is compared with the sound feature information corresponding to each song extracted at the step S5, and then the similarity between the lyric feature information 40 and sound feature information corresponding to each song and those corresponding to the inputted search ward is calculated for every song (step S6) .

Further, based on the similarity calculated for each song, a reproduction list in which the songs to be outputted are arranged in higher order of the similarity is prepared (step S7), and the songs arranged in the order equal to that of the reproduction list are extracted from the song database 2 and are outputted to the song output unit 10 (step S8).

When one song is outputted, the user listening to the outputted song evaluates whether or not the outputted song is appropriate for the inputted search word at the step S1 and inputs the evaluation result by using the input unit 9 (step S9).

Further, when the outputted song is appropriate for the search word (step S9; matching), the below-mentioned matching history information is updated (step S11), and then the process proceeds to the step S12. On the other hand, when the outputted song is inappropriate for the search word at the evaluating step S9 (step S9: non-matching), the below-mentioned non-matching history information is updated (step S10), and then the process proceeds to the step S12.

Here, the non-matching history information updated at the above-mentioned step S10 and the matching history information updated at the above-mentioned step S11 will be explained with reference to FIG. 5 in detail.

First, as the matching history information G, as shown in FIG. 5A, in addition to the song feature information 20 of the song which is evaluated to be appropriate for the search word by the evaluation for the search word inputted by the user, based on the constituent word information included in the song feature information 20, the lyric feature information 40 (the lyric feature information 40 corresponding to the song) generated by the method which is identical to the method illustrated at the step S4 with reference to the effective conversion table T is included.

On the other hand, as the non-matching history information NG, as shown in FIG. 5B, in addition to the song feature information 20 of the song which is evaluated to be inappropriate for the search word by the evaluation for the search word inputted by the user, based on the constituent word information included in the song feature information 20, the lyric feature information 40 (the lyric feature information 40 corresponding to the song) generated by the method which is identical to the method illustrated at the above-mentioned step S4 with reference to the effective conversion table T is included, in a similar manner to the case of the matching history information G.

Moreover, when the updating of the history information is finished with respect to the predetermined number of songs, based on the result, the content of the above-mentioned conversion table T and the content of the search word feature information 30 are updated (step S12).

Next, whether the output of the final song in the reproduction list prepared at the above-mentioned step s7 is finished is determined (step S13). When the output of the final song is not finished (step S13; NO), the process returns to the above-mentioned step 38. At the step S8, the next song in the reproduction list is outputted and then the steps S9 to S12 are repeated with respect to the next song. On the other hand, in the determination of the step 13, when the output of the final song is finished (step S13: YES), the song search process is completed.

Next, the update process of the conversion table T at the above-mentioned step S12 will be explained with reference to FIGS. 6 to 8.

In the update process of the conversion table T, as shown in FIG. 6, when the search word inputted at the timing for performing the update process is confirmed to have the same subjective feeling as the search word representing the subjective feeling represented by any entity of the song feature information 40 (step S20) and when the subjective feeling is not matched (step S20: NO), the conversion table T is not updated and the process proceeds to the process for updating the next entity of the search word feature information 30.

On the other hand, if the subjective feeling is matched (step S20: YES), then the process proceeds to the update process of the actual conversion table T.

In addition, in the below-mentioned update process, with respect to the predetermined number of the songs (forty songs (twenty appropriate songs and twenty inappropriate songs) in FIGS. 7 and 8), the case of updating the conversion table T corresponding to the search word will be explained, based on the content of the constituent word included in the song which is evaluated to be appropriate for one search word ('heart-warming' in FIGs. 7 and 8) and the content of the constituent word included in the song which is evaluated to be inappropriate for the search word. Also, in FIGS. 7 and 8, only the items needed for the update process of the conversion table T are extracted among the contents of the history information shown in FIG. 5.

In the actual update process, first, for every constituent word of the song which is evaluated to be appropriate for the matching history information (one storage address corresponding to one song, in FIG. 7), all '0's and '1's in the vertical direction of FIG, 7 are added for all the songs (twenty songs) and the added value is divided by the number of the songs ('20' in FIG. 7) to obtain the average value AA (step S21). For example, in the case of the constituent word of 'love' in the matching history information, since the number of the songs including the constituent word of 'love' is five, this number is divided by 20 which is the total number of songs. Thus, the average value AA for the constituent word of 'love' is determined to be 0.25. Further, the average calculating process is performed with respect to all the constituent words.

Next, similarly to the above, with respect to the non-matching history information, for every constituent word of the songs which are evaluated to be inappropriate, all '0's and '1's in the vertical direction of FIG. 7 are added for all the songs and the added value is divided by the total number of the songs to obtain the average value DA (step S21). For example, in the case of the constituent word of 'love' in the non-matching history information, since the number of the songs including the constituent word of 'love' is 14, the average value DA for the constituent word of 'love' is determined to be 0.70 by dividing the number of 14 with the total number of the songs. Further, the average calculating process is performed with respect to all the constituent words.

Here, the larger the difference between the average value AA and the average value DA for every constituent word, the higher the probability of representing the lyric feature information 40 corresponding to the current search word by the constituent word.

However, note that the average values AA and DA calculated by the above-mentioned process are not the result obtained by evaluating for the entire songs stored in the song database 2. Accordingly, the confidence interval of each calculated average value (statistically, referred to as a sample ratio) must be obtained and the difference between the average value AA and the average value DA corresponding to each constituent word, (the absolute value of average value AA - average value DA), must be determined whether it can be used as the weight value of the history information of the constituent word. More specifically, assuming the confidence level of the confidence interval to be 90%, the difference is determined whether it can be used as the weight value of the history information of the constituent word by using the confidence interval calculated by the below-mentioned equation (1). That is, the confidence interval is calculated by the following equation for each constituent word:

$$\text{Confidence interval} = 2 \times 1.65 \times [(AA \times (1-AA))/N]^{1/2} \qquad (1)$$

, where N is a number of songs.

Next, when the confidence interval is calculated, the absolute value of the value obtained by subtracting the average value DA from the average value AA is determined whether it is larger than the calculated confidence interval (step S23).

Further, if the absolute value of the value obtained by subtracting the average value DA from the average value AA is larger than the calculated confidence interval (step S23: YES), the difference becomes a reliable value and is employed as the weight value of the corresponding lyric feature information (the lyric feature information of 'heart-warming' in FIG. 7) in the conversion table T, and then is registered (stored) in the corresponding conversion table T (step S24). On the other hand, in the step S23, if the absolute value of the value obtained by subjecting the average value DA from the average value AA is not larger than the calculated confidence interval (step S23: NO), the difference can not be used as a reliable value, and the weight value of the corresponding constituent word in the conversion table T is updated to '0' (step S25).

In addition, in the initial state of the song search apparatus S, since the history information includes the initial values set in advance and the number of songs which becomes the target of the history information is limited, as a result, new history information is stored by overwriting the old history information. Thereby, as the evaluation of the outputted songs is made, the subjective feeling of the user is reflected on the weight values of the conversion table T. This shows that the conversion table T can be updated accordingly in case the subjective feeling changes.

Next, when the evaluation for twenty songs (ten songs having the matching history information + (plus) ten songs having the non-matching history information) from the state in FIG. 7 is made by the user, changes in the conversion table T will be illustrated with reference to FIG. 8. Also, since the updating method itself of the conversion table T after making the evaluation until the state shown in FIG. 8 is completely identical to the case shown in FIG. 7, the detailed description thereof is omitted.

For example, for the constituent word 'sea' shown in FIG. 8, the songs including the constituent word of 'sea' (the value thereof being '1') are stored preferentially in the matching history information, and thus the average value DA for the constituent word of 'sea' is reduced. Accordingly, it is appreciated that the constituent word of 'sea' contributes to the increment of the weight value of the lyric feature information of 'heart-warming'.

Further, similarly, since the constituent word of 'love' is stored in the matching history information and the non-matching history information without any bias, the difference between the average value AA and the average value DA for the constituent word 'love' becomes smaller than the above-mentioned confidence interval, and thus the constituent word 'love' becomes the constituent word which is not related to the lyric feature information 'heart-warming'.

As explained above, according to the operation of the song search apparatus S of the present embodiment, since songs are searched by comparing the entity of the search word feature information 30 corresponding to an inputted search word and the entity of the song feature information 20 corresponding to the stored songs, appropriate songs can be certainly searched by the inputted search word, and songs matched to the subjective feeling of a user can be much easily searched, compared with the case of searching songs using only an inputted search word.

Also, since at least the lyric feature information 40 corresponding to the subjective feeling identical to the subjective feeling represented by an inputted search word is generated, songs are searched by using the lyric feature information 40 reflecting the subjective feeling of a user, and thus songs suitable for the subjective feeling of the user can be easily searched.

Further, since the lyric feature information 40 is generated by using the conversion table T, the suitable lyric feature information 40 can be generated by an arrangement of a simple apparatus.

Moreover, since songs corresponding to an inputted search word are extracted by comparing the lyric feature information 40 which constitutes the search word feature information 30 corresponding to the inputted search word with the lyric feature information 40 corresponding to the song feature information 20 and simultaneously by comparing the sound feature information which constitutes the search word feature information 30 corresponding to the inputted search word with the sound feature information which constitutes the song feature information 20, songs which are appropriate for the search word can be easily searched.

In addition, since the conversion table T is updated based on the evaluation of a user, the certainty of the conversion table T based on the evaluation of the user becomes higher, and thus songs according to the subjective feeling of the user can be easily searched,

Further, since each entity of the search word feature information 30 is updated based on the evaluation of a user, the certainty of the search word feature information 30 based on the evaluation of the user becomes higher, and thus songs according to the subjective feeling of the user can be easily searched.

Further, since the conversion table T or the search word feature information 30 is updated based on an inputted evaluation data by using the history information of each song, the conversion table T or the search word feature information 30 is updated according to the subjective feeling of a user by reflecting the past history thereof, and thus songs according to the subjective feeling of the user can be easily searched.

Also, since, for every constituent word, the weight value of the constituent word is updated by using the difference between the average value AA and the average value DA and also since the conversion table T is updated, the certainty of the conversion table T becomes higher, and thus songs according to the subjective feeling of a user can be easily searched.

In addition, although the case of applying the present invention to the song search apparatus S for accumulating and searching a plurality of songs in the above-mentioned embodiment was explained, the present invention may be applied to the image search apparatus which searches still images or moving images accumulated in accordance with the subjective feeling of a user.

Also, by recording a program corresponding to the flow chart shown in FIGS. 3 and 6 in an information recording media such as a flexible disk, or by obtaining and recording the corresponding program by a network such as Internet, the program is read out and executed by using a general-purpose microcomputer etc. and thus the general-purpose microcomputer can be used as the search process unit 8 related to the embodiment.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and range of equivalency of the claims are therefore intended to be embraced therein.

## Claims

1. A song search apparatus (S) which searches a song among a plurality of songs comprised of lyrics and performances, **characterized in that** the song search apparatus (S) comprises:

    a song feature information storing device (3) which distinguishably stores song feature information comprised of constituent word information which indicates contents of a plurality of constituent words included in the song, and first sound feature information which indicates the sound feature of the performance included in the song, for every song;
    a search word input device (9) which is used to input a search word representing the song to be searched;
    a search word feature information storing device (4) which distinguishably stores, as search word feature information characterizing an inputted search word, the search word feature information comprised of first lyric feature information, which is a collection of weighted constituent words obtained by applying a weight value to each constituent word constituting the lyrics included in any one of the songs to be searched by using the search word, and second sound feature information which indicates sound feature of the performance included in any one of the songs to be searched by using the search word, for every search word;
    a lyric feature information generating device (8) which generates second lyric feature information which is a collection of weighted constituent words obtained by applying a weight value to each constituent word included in the song, for every song, based on the constituent word information corresponding to the song;
    a comparison device (8) which compares the first lyrics feature information that constitutes input search word feature information as the search word feature information corresponding to the inputted search word with the generated second lyric feature information, and which compares the second sound feature information that constitutes the input search word feature information with each of the stored first sound feature information; and
    an extracting device (8) which extracts a song to have the best similarity to the input search word feature information, as the song corresponding to the inputted search word, based on the comparison result of the comparison device (8).

2. The information search apparatus according to claim 1, wherein the lyric feature information generating device (8) generates at least the second lyric feature information corresponding to the inputted search word.

3. The information search apparatus (S) according to claim 1, wherein the lyric feature information generating device (8) generates the second lyric feature information by using a conversion table which represents a correspondence relationship among the constituent words, the second lyric feature information, and the weighted constituent words included in the collection corresponding to the second lyric feature information.

4. The information search apparatus (S) according to claim 3, further comprising an evaluation information input device (9) which is used to input evaluation information indicating whether or not an extracted song is appropriate for the inputted search word; and a table updating device (8) which updates the conversion table based on the inputted evaluation information.

5. The information search apparatus (S) according to claim 1, further comprising an evaluation information input device (9) which is used to input evaluation information indicating whether or not an extracted song is appropriate for the inputted search word; and a search word feature information updating device (8) which updates the search word feature information based on the inputted evaluation information.

6. The information search apparatus (S) according to claim 4, wherein, for the song, the table updating device (8) updates the conversion table based on the inputted evaluation information, by using history information which includes the constituent word information corresponding to the song, the second lyrics feature information corresponding to the song, and the first sound feature information corresponding to the song.

7. The information search apparatus (S) according to claim 5, wherein, for the song, the search word feature information updating device (8) updates the search word feature information based on the inputted evaluation information, by using history information which includes the constituent word information corresponding to the song, the second lyrics feature information corresponding to the song, and the first sound feature information corresponding to the song.

8. The information search apparatus (S) according to claim 6 or 7, wherein, for every constituent word, the table updating device (8) updates the conversion table by applying a weight value to each constituent word using the difference between a first averaging information obtained by averaging matching information indicating whether the constituent word is included in the song which is evaluated to be appropriate for the inputted search word based on a number of the evaluation and a second averaging information obtained by averaging non-matching information indicating whether the constituent word is included in the song which is evaluated to be inappropriate for the inputted search word based on a number of the evaluation.

9. The information search apparatus (S) according to any one of claims 1 to 7, further comprising a song storing device (2) which stores the plurality of songs.

10. A song search method which searches a song among a plurality of songs comprised of lyrics and performances, **characterized in that** the song search method comprises:

a search word input process in which a search word indicating a song to be searched is inputted;
a lyric feature information generating process in which second lyric feature information that is a collection of weighted constituent words obtained by applying a weight value to each constituent word included in the song is generated for every song, based on the constituent word information corresponding to the song;
a comparison process in which the first lyrics feature information that constitutes input search word feature information as the search word feature information corresponding to the inputted search word, the input search word feature information comprised of first lyric feature information that is a collection of weighted constituent words obtained by applying a weight value to each of the constituent words constituting the lyrics included in any one of the songs to be searched by using the inputted search word, and second sound feature information that indicates sound feature of the performance included in any one of the songs to be searched by using the inputted search word, is compared with the generated second lyric feature information, and in which the second sound feature information that constitutes the input search word feature information is compared with each of first sound feature information that indicates the sound feature of the song included in each of the songs; and
an extracting process in which a song to have the best similarity to the input search word feature information are extracted, as the song which are appropriate for the inputted search word, based on the comparison result of the comparison process.

11. An information recording medium on which a song search program is recorded so as to be readable through a computer which is included in a song search apparatus (S) which searches a song among a plurality of songs comprised of lyrics and performances with a pre-installed re-writable recording medium, **characterized in that** the song search program causes the computer to function as:

a song feature information storing device (3) which distinguishably stores song feature information comprised of constituent word information that represents contents of a plurality of constituent words included in the song and first sound feature information which indicates the sound feature of the performance included in the song, for every song;
a search word input device (9) which is used to input a search word representing the song to be searched;
a search word feature information storing device (4) which distinguishably stores, as search word feature information characterizing an inputted search word, the search word feature information comprised of first lyric feature information which is a collection of weighted constituent words obtained by applying a weight value to each constituent word constituting the lyrics included in any one of the songs to be searched by using a corresponding search word and second sound feature information indicating the sound feature of the performance included in any one of the songs to be searched by using the corresponding search word, for every search word;
a lyric feature information generating device (8) which generates second lyric feature information which is a collection of weighted constituent words obtained by applying a weight value to each constituent word included in the song, for every song, based on the constituent word information corresponding to the song;
a comparison device (8) which compares the first lyrics feature information that constitutes input search word feature information as the search word feature information corresponding to the inputted search word with the generated second lyric feature information, and which compares the second sound feature information that constitutes the input search word feature information with each of the stored first sound feature information; and
an extracting device (8) which extracts a song to have the best similarity to the input search word feature information, as the song appropriate for the inputted search word, based on the comparison result of the comparison device (8).

## Patentansprüche

1. Liedsuchgerät (S), welches ein Lied unter einer Vielzahl von Liedern, die Texte und Performanzen aufweisen, sucht, **dadurch gekennzeichnet, dass** das Liedsuchgerät (S) aufweist:

- eine Liedmerkmalsinformations-Speichervorrichtung (3), welche unterscheidbar Liedmerkmalsinformationen für jedes Lied speichert, die einzelne Wortinformationen, die Inhalte einer Vielzahl von einzelnen Wörtern, die in dem Lied beinhaltet sind, indizieren, und erste Klangmerkmalsinformationen aufweisen, welche das Klangmerkmal der Performance, die in dem Lied beinhaltet ist, indiziert,
- eine Suchworteingabevorrichtung (9), welche dazu verwendet wird, ein Suchwort, welches das gesuchte Lied repräsentiert, einzugeben,
- eine Suchwortmerkmalsinformation-Speichervor-richtung (4), welche unterscheidbar als das eingegebene Suchwort charakterisierende Suchwortmerkmalsinformation für jedes Suchwort eine Suchwortmerkmalsinformation, die eine erste Textmerkmalsinformation aufweist, welche eine Sammlung von gewichteten einzelnen Wörtern ist, die durch Anwenden eines Gewichtungswertes auf jedes einzelne Wort erhalten wird, welche den Text bilden, der in einem der Lieder beinhaltet ist, die unter Verwendung des Suchwortes gesucht werden, und eine zweite Klangmerkmalsinformation speichert, welche ein Klangmerkmal der Performanz, welche in einem der Lieder beinhaltet ist, welche unter Verwendung des Suchwortes gesucht werden, für jedes Suchwort,
- eine Textmerkmalsinformationserzeugungsvorrichtung (8), welche eine zweite Textmerkmalsinformation für jedes Lied erzeugt, welche eine Sammlung von gewichteten einzelnen Worten ist, die durch Anwenden eines gewichteten Wertes auf jedes einzelne Wort erhalten wird, welche in dem Lied beinhaltet sind, basierend auf der dem Lied der entsprechenden einzelnen Wortinformation,
- eine Vergleichsvorrichtung (8), welche die erste Textmerkmalsinformation, die eine Eingabe-Suchwortmerkmalsinformation als die dem eingegebenen Suchwort entsprechende Suchwortmerkmalsinformation bildet, mit der generierten zweiten Textmerkmalsinformation vergleicht, und welche die zweite Klangmerkmalsinformation, welche die Eingabe-Suchwortmerkmalsinformation bildet, mit jeder der gespeicherten ersten Klangmerkmalsinformationen vergleicht; und

- eine Extrahiervorrichtung (8), welche ein Lied extrahiert, welches die beste Ähnlichkeit zu der Eingabesuchwort-Merkmalsinformation hat, als das Lied, das dem eingegebenen Suchwort entspricht, basierend auf dem Vergleichsergebnis der Vergleichsvorrichtung (8).

**2.** Informationssuchgerät (S) nach Anspruch 1, wobei die Textmerkmalsinformationserzeugungsvorrichtung (3) zumindest die zweite Textmerkmalsinformation, die dem eingegebenen Suchwort entspricht, generiert.

**3.** Informationssuchgerät (S) nach Anspruch 1, wobei die Textmerkmalsinformationserzeugungsvorrichtung (8) die zweite Textmerkmalsinformation unter Verwendung einer Umrechnungstabelle generiert, welche ein Übereinstimmungsverhältnis zwischen den einzelnen Wörtern, der zweiten Textmerkmalsinformation und den gewichteten einzelnen Wörtern, welche in der der zweiten Textmerkmalsinformation entsprechenden Sammlung beinhaltet sind, repräsentiert.

**4.** Informationssuchgerät (S) nach Anspruch 3,
weiter aufweisend eine Bewertungsinformations-Eingabevorrichtung (9), welche dazu verwendet wird, eine Bewertungsinformation einzugeben, welche indiziert, ob oder ob nicht ein extrahiertes Lied für das eingegebene Suchwort geeignet ist, und eine Tabellenaktualisierungsvorrichtung (8), welche die Umrechnungstabelle basierend auf der eingegebenen Bewertungsinformation aktualisiert.

**5.** Informationssuchgerät (S) nach Anspruch 1,
weiter aufweisend eine Bewertungsinformations-Eingabevorrichtung (9), welche dazu verwendet wird, eine Bewertungsinformation einzugeben, welche indiziert, ob oder ob nicht, ein extrahiertes Lied für das eingegebene Suchwort geeignet ist, und eine Suchwortmerkmalsinformationsaktualisierungsvorrichtung (8), welche die Suchwortmerkmalsinformation basierend auf der eingegebenen Bewertungsinformation aktualisiert.

**6.** Informationssuchgerät (S) nach Anspruch 4,
wobei die Tabellenaktualisierungsvorrichtung (8) für das Lied die Umrechnungstabelle basierend auf der eingegebenen Bewertungsinformation unter Verwendung einer Historieinformation aktualisiert, welche die dem Lied entsprechende einzelne Wortinformation, die dem Lied entsprechende zweite Textmerkmalsinformation und die dem Lied entsprechende erste Klangmerkmalsinformation beinhaltet.

**7.** Informationssuchgerät (S) nach Anspruch 5,
wobei die Suchwortmerkmalsinformationsaktualisierungsvorrichtung (8) für jedes Lied die Suchwortmerkmalsinformation basierend auf der eingegebenen Bewertungsinformation unter Verwendung einer Historieinformation aktualisiert, welche die dem Lied entsprechende einzelne Wortinformation, die dem Lied entsprechende zweite Textmerkmalsinformation und die dem Lied entsprechende Klangmerkmalsinformation beinhaltet.

**8.** Informationssuchgerät (S) nach Anspruch 6 oder 7,
wobei die Tabellenaktualisierungsvorrichtung (8) für jedes einzelne Wort die Umrechnungstabelle durch Anwenden eines Gewichtungswertes auf jedes einzelne Wort aktualisiert unter Verwendung der Differenz zwischen einer Durchschnittsberechnungs-Information, die durch eine Durchschnittsberechnungs-Abweichinformation erhalten wird, die indiziert, ob das einzelne Wort in dem Lied beinhaltet ist, das bewertet ist für das eingegebene Suchwort basierend auf einer Anzahl von Bewertungen geeignet zu sein, und einer zweiten Durchschnittsberechnungs-Information, die durch eine Durchschnittsberechnungs-Nichtabgleichinformation erhalten wird, die indiziert, ob das einzelne Wort in dem Lied beinhaltet ist, welches bewertet ist für das eingegebene Suchwort basierend auf einer Anzahl von Bewertungen ungeeignet zu sein.

**9.** Informationssuchgerät (S) nach einem der Ansprüche 1 bis 7, weiter aufweisend eine Liedspeichervorrichtung (2), welche eine Vielzahl von Liedern speichert.

**10.** Liedsuchverfahren, welches ein Lied unter einer Vielzahl von Liedern sucht, welche Texte und Performanzen aufweisen, **dadurch gekennzeichnet, dass** das Liedsuchverfahren aufweist:

- einen Suchworteingabeprozess, in dem ein Suchwort, welches das gesuchte Lied indiziert, eingegeben wird;
- einen Textmerkmalsinformationserzeugungsprozess, in dem eine zweite Textmerkmalsinformation für jedes Lied erzeugt, welche eine Sammlung von gewichteten einzelnen Worten ist, die durch Anwenden eines gewichteten Wertes auf jedes einzelne Wort erhalten wird, welche in dem Lied beinhaltet sind, basierend auf der dem Lied der entsprechenden einzelnen Wortinformation,

- einen Vergleichsprozess, in dem die erste Textmerkmalsinformation, die eine Eingabe-Suchwortmerkmalsinformation als die dem eingegebenen Suchwort entsprechende Suchwortmerkmalsinformation bildet, wobei die Eingabe-Suchwortmerkmalsinformation eine erste Textmerkmalsinformation, die eine Sammlung von gewichteten einzelnen Wörtern ist, welche durch Anwenden eines gewichteten Wertes auf jede der einzelnen Wörter erhalten wird, die den Text bilden, der in einem der Lieder beinhaltet ist, die unter Verwendung des eingegebenen Suchwortes gesucht werden, und eine zweite Klangmerkmalsinformation, die das Klangmerkmal der Performanz indiziert, die in einem der Lieder beinhaltet ist, welche unter Verwendung des eingegebenen Suchwortes gesucht werden, mit der generierten zweiten Textmerkmalsinformation verglichen werden, und in dem die zweite Klangmerkmalsinformation, die die Eingabe-Suchwortmerkmalsinformation bildet, mit jeder der ersten Klangmerkmalsinformation verglichen wird, die das Klangmerkmal des Liedes, welches in jedem der Lieder beinhaltet ist, indiziert; und
- einen Extrahierprozess, in dem ein Lied extrahiert wird, welches die beste Ähnlichkeit zu der Eingabe-Suchwortmerkmalsinformation hat, als das Lied, das für das eingegebene Suchwort geeignet ist, basierend auf dem Vergleichsergebnis der Vergleichsprozesses.

**11.** Informationsspeichermedium, auf welchem ein Liedsuchprogramm gespeichert ist, um durch einen Computer lesbar zu sein, welcher ein Lied unter einer Vielzahl von Liedern sucht, welche Texte und Performanzen aufweisen, mit einem vorinstallierten wiederbeschreibbaren Aufnahmemedium, **dadurch gekennzeichnet, dass** das Liedsuchprogramm den Computer veranlasst zu arbeiten als:

- eine Liedmerkmalsinformations-Speichervorrichtung (3), welche unterscheidbar Liedmerkmalsinformationen für jedes Lied speichert, die einzelne Wortinformationen, die Inhalte einer Vielzahl von einzelnen Wörtern, die in dem Lied beinhaltet sind, indizieren, und erste Klangmerkmalsinformationen aufweisen, welche das Klangmerkmal der Performance, die in dem Lied beinhaltet ist, indiziert,
- eine Suchworteingabevorrichtung (9), welche dazu verwendet wird, ein Suchwort, welches das gesuchte Lied repräsentiert, einzugeben,
- eine Suchwortmerkmalsinformation-Speichervorrichtung (4), welche unterscheidbar als das eingegebene Suchwort charakterisierende Suchwortmerkmalsinformation für jedes Suchwort eine Suchwortmerkmalsinformation, die eine erste Textmerkmalsinformation aufweist, welche eine Sammlung von gewichteten einzelnen Wörtern ist, die durch Anwenden eines Gewichtungswertes auf jedes einzelne Wort erhalten wird, welche den Text bilden, der in einem der Lieder beinhaltet ist, die unter Verwendung des Suchwortes gesucht werden, und eine zweite Klangmerkmalsinformation speichert, welche ein Klangmerkmal der Performanz, welche in einem der Lieder beinhaltet ist, welche unter Verwendung des Suchwortes gesucht werden, für jedes Suchwort,
- eine Textmerkmalsinformationserzeugungsvorrichtung (8), welche eine zweite Textmerkmalsinformation für jedes Lied erzeugt, welche eine Sammlung von gewichteten einzelnen Worten ist, die durch Anwenden eines gewichteten Wertes auf jedes einzelne Wort erhalten wird, welche in dem Lied beinhaltet sind, basierend auf der dem Lied der entsprechenden einzelnen Wortinformation,
- eine Vergleichsvorrichtung (8), welche die erste Textmerkmalsinformation, die eine Eingabe-Suchwortmerkmalsinformation als die dem eingegebenen Suchwort entsprechende Suchwortmerkmalsinformation bildet, mit der generierten zweiten Textmerkmalsinformation vergleicht, und welche die zweite Klangmerkmalsinformation, welche die Eingabe-Suchwortmerkmalsinformation bildet, mit jeder der gespeicherten ersten Klangmerkmalsinformationen vergleicht; und
- eine Extrahiervorrichtung (8), welche ein Lied extrahiert, welches die beste Ähnlichkeit zu der Eingabesuchwort-Merkmalsinformation hat, als das Lied, das dem eingegebenen Suchwort entspricht, basierend auf dem Vergleichsergebnis der Vergleichsvorrichtung (8).

## Revendications

**1.** Appareil de recherche de chansons (S) qui recherche une chanson parmi une pluralité de chansons constituées de paroles et de musique, **caractérisé en ce que** l'appareil de recherche de chansons (S) comprend :

un dispositif de stockage d'informations caractéristiques de chanson (3) qui stocke, en pouvant les distinguer, des informations caractéristiques de chanson constituées d'informations de mot constitutif qui indiquent les contenus d'une pluralité de mots constitutifs inclus dans la chanson, et des premières informations de caractéristique sonore qui indiquent la caractéristique sonore de la musique incluse dans la chanson, pour chaque chanson ;
un dispositif d'entrée de mot de recherche (9) qui est utilisé afin d'entrer un mot de recherche représentant la chanson à rechercher ;
un dispositif de stockage d'informations caractéristiques de mot de recherche (4) qui stocke, en pouvant les distinguer, comme informations caractéristiques de mot de recherche caractérisant un mot de recherche entré, les informations caractéristiques de mot de recherche constituées des premières informations caractéristiques de parole, qui sont un ensemble de mots constitutifs pondérés obtenus en appliquant une valeur de pondération à chaque mot constitutif constituant les paroles incluses dans l'une quelconque des chansons à rechercher en utilisant le mot de recherche, et des deuxièmes informations de caractéristique sonore qui indiquent la caractéristique sonorede la musique incluse dans l'une quelconque des chansons à rechercher en utilisant le mot de recherche, pour chaque mot de recherche ;
un dispositif générateur d'informations caractéristiques de parole (8) qui génère des deuxièmes informations caractéristiques de parole qui sont un ensemble de mots constitutifs pondérés obtenus en appliquant une valeur de pondération à chaque mot constitutif inclus dans la chanson, pour chaque chanson, sur la base des informations de mot constitutif correspondant à la chanson ;
un dispositif de comparaison (8) qui compare les premières informations caractéristiques de parole constituant des informations caractéristiques de mot de recherche entré en tant qu'informations caractéristiques de mot de recherche correspondant au mot de recherche entré avec les deuxièmes informations caractéristiques de parole générées, et qui compare les deuxièmes informations de caractéristique sonore constituant les informations caractéristiques de mot de recherche entré avec chacune des premières informations de caractéristique sonore stockées ; et
un dispositif d'extraction (8) qui extrait une chanson devant avoir la meilleure similitude avec les informations caractéristiques de mot de recherche d'entrée, comme chanson correspondant au mot de recherche entré, sur la base du résultat de comparaison du dispositif de comparaison (8).

**2.** Appareil de recherche d'informations selon la revendication 1, dans lequel le dispositif générateur d'informations caractéristiques de parole (8) génère au moins les deuxièmes informations caractéristiques de parole correspondant au mot de recherche entré.

**3.** Appareil de recherche d'informations (S) selon la revendication 1, dans lequel le dispositif générateur d'informations caractéristiques de parole (8) génère les deuxièmes informations caractéristiques de parole en utilisant une table de conversion qui représente une relation de correspondance parmi les mots constitutifs, les deuxièmes informations caractéristiques de parole et les mots constitutifs pondérés inclus dans l'ensemble correspondant aux deuxièmes informations caractéristiques de parole.

**4.** Appareil de recherche d'informations (S) selon la revendication 3, comprenant en outre un dispositif d'entrée d'informations d'évaluation (9) qui est utilisé pour entrer des informations d'évaluation indiquant si oui ou non une chanson extraite est appropriée pour le mot de recherche entré ; et un dispositif de mise à jour de table (8) qui met à jour la table de conversion sur la base des informations d'évaluation entrées.

**5.** Appareil de recherche d'informations (S) selon la revendication 1, comprenant en outre un dispositif d'entrée d'informations d'évaluation (9) qui est utilisé afin d'entrer des informations d'évaluation indiquant si oui ou non une chanson extraite est appropriée pour le mot de recherche entré ; et un dispositif de mise à jour d'informations caractéristiques de mot de recherche (8) qui met à jour les informations caractéristiques de mot de recherche sur la base des informations d'évaluation entrées.

**6.** Appareil de recherche d'informations (S) selon la revendication 4, dans lequel, pour la chanson, le dispositif de mise à jour de table (8) met à jour la table de conversion sur la base des informations d'évaluation entrées, en utilisant des informations historiques qui incluent les informations de mot constitutif correspondant à la chanson, les deuxièmes informations caractéristiques de parole correspondant à la chanson, et les premières informations de caractéristique sonore correspondant à la chanson.

**7.** Appareil de recherche d'informations (S) selon la revendication 5, dans lequel, pour la chanson, le dispositif de mise à jour des informations caractéristiques de mot de recherche (8) met à jour les informations caractéristiques de mot de recherche sur la base des informations d'évaluation entrées, en utilisant les informations historiques qui incluent les informations de mot constitutif correspondant à la chanson, les deuxièmes informations caractéristiques de paroles correspondant à la chanson, et les premières informations de caractéristique sonore correspondant à la chanson.

**8.** Appareil de recherche d'informations (S) selon l'une quelconque des revendications 6 ou 7, dans lequel, pour chaque mot constitutif, le dispositif de mise à jour de table (8) met à jour la table de conversion en appliquant une valeur de pondération à chaque mot constitutif en utilisant la différence entre des premières informations de moyennage obtenues en moyennant les informations appariées indiquant si le mot constitutif est inclus dans la chanson qui est évaluée comme étant appropriée pour le mot de recherche entré sur la base du nombre d'informations de l'évaluation et des deuxièmes informations de moyennage obtenues en moyennant des informations non appariées indiquant si le mot constitutif est inclus dans la chanson qui est évaluée comme étant inappropriée pour le mot de recherche entré sur la base du nombre de l'évaluation.

**9.** Appareil de recherche d'informations (S) selon l'une quelconque des revendications 1 à 7, comprenant en outre un dispositif de stockage de chansons (2) qui stocke la pluralité de chansons.

**10.** Procédé de recherche de chansons qui recherche une chanson parmi une pluralité de chansons constituées de paroles et de musique, **caractérisé en ce que** le procédé de recherche de chansons comprend :

un processus d'entrée de mot de recherche dans lequel un mot de recherche indiquant une chanson à rechercher est entré ;
un processus de génération d'informations caractéristiques de parole dans lequel des deuxièmes informations caractéristiques de parole qui sont un ensemble de mots constitutifs pondérés obtenus en appliquant une valeur de pondération à chaque mot constitutif inclus dans la chanson sont générées pour chaque chanson, sur la base des informations de mot constitutif correspondant à la chanson ;
un processus de comparaison dans lequel les premières informations caractéristiques de paroles qui constituent les informations caractéristiques de mot de recherche entré comme informations caractéristiques de mot de recherche correspondant au mot de recherche entré, les informations caractéristiques de mot de recherche entré constituées de premières informations caractéristiques de parole qui sont un ensemble des mots constitutifs pondérés obtenus en appliquant une valeur de pondération à chacun des mots constitutifs constituant les paroles incluses dans l'une quelconque des chansons à rechercher en utilisant le mot de recherche entré, et deuxièmes informations de caractéristique sonore qui indiquent les caractéristiques sonores de la musique incluse dans l'une quelconque des chansons à rechercher en utilisant le mot de recherche entré, sont comparées aux deuxièmes informations caractéristiques de parole générées, et dans lequel les deuxièmes informations de caractéristique sonore qui constituent les informations caractéristiques de mot de recherche entré sont comparées à chacune des premières informations de caractéristique sonore qui indiquent la caractéristique sonore de la chanson incluse dans chacune des chansons ; et
un processus d'extraction dans lequel une chanson devant avoir la meilleure similitude par rapport aux informations caractéristiques du mot de recherche entré est extraite, comme chanson appropriée pour le mot de recherche entré, sur la base du résultat de comparaison du processus de comparaison.

**11.** Support d'enregistrement d'informations dans lequel un programme de recherche de chansons est enregistré de manière à pouvoir être lu par un ordinateur qui est inclus dans un appareil de recherche de chansons (S) qui recherche une chanson parmi une pluralité de chansons constituées de paroles et de musique avec un support d'enregistrement préinstallé réinscriptible, **caractérisé en ce que** le programme de recherche de chansons amène l'ordinateur à fonctionner comme :

un dispositif de stockage d'informations caractéristiques de chanson (3) qui stocke, en pouvant les distinguer, les informations caractéristiques de chanson constituées d'informations de mot constitutif qui représentent les contenus d'une pluralité de mots constitutifs inclus dans la chanson et les premières informations de caractéristique sonore qui indiquent la caractéristique sonore de la musique incluse dans la chanson, pour chaque chanson ;
un dispositif d'entrée de mot de recherche (9) qui est utilisé pour entrer un mot de recherche représentant la chanson à rechercher ;
un dispositif de stockage d'informations caractéristiques de mot de recherche (4) qui stocke, de manière à les distinguer, comme informations caractéristiques de mot de recherche caractérisant un mot de recherche entré, les informations caractéristiques de mot de recherche constituées de premières informations caractéristiques de parole qui sont un ensemble de mots constitutifs pondérés obtenus en appliquant une valeur de pondération à chaque mot constitutif constituant les paroles incluses dans l'une quelconque des chansons à rechercher en utilisant un mot de recherche correspondant et des deuxièmes informations de caractéristique sonore indiquant la caractéristique sonore de la musique incluse dans l'une quelconque des chansons à rechercher en utilisant le mot de recherche correspondant, pour chaque mot de recherche ;
un dispositif générateur d'informations caractéristiques de parole (8) qui génère les deuxièmes informations caractéristiques de parole qui sont un ensemble de mots constitutifs pondérés obtenus en appliquant une valeur de pondération à chaque mot constitutif inclus dans la chanson, pour chaque chanson, sur la base des informations de mot constitutif correspondant à la chanson ;
un dispositif de comparaison (8) qui compare les premières informations caractéristiques de parole qui constituent les informations caractéristiques de mot de recherche entré comme informations caractéristiques de mot de recherche correspondant au mot de recherche entré avec les deuxièmes informations caractéristiques de parole générées, et qui compare les deuxièmes informations de caractéristique sonore constituant les informations caractéristiques de mot de recherche entré avec chacune des premières informations de caractéristique sonore stockées ; et
un dispositif d'extraction (8) qui extrait une chanson devant avoir la meilleure similitude avec les informations caractéristiques de mot de recherche entré, comme chanson appropriée pour le mot de recherche entré, sur la base du résultat de comparaison du dispositif de comparaison (8).

FIG. 1

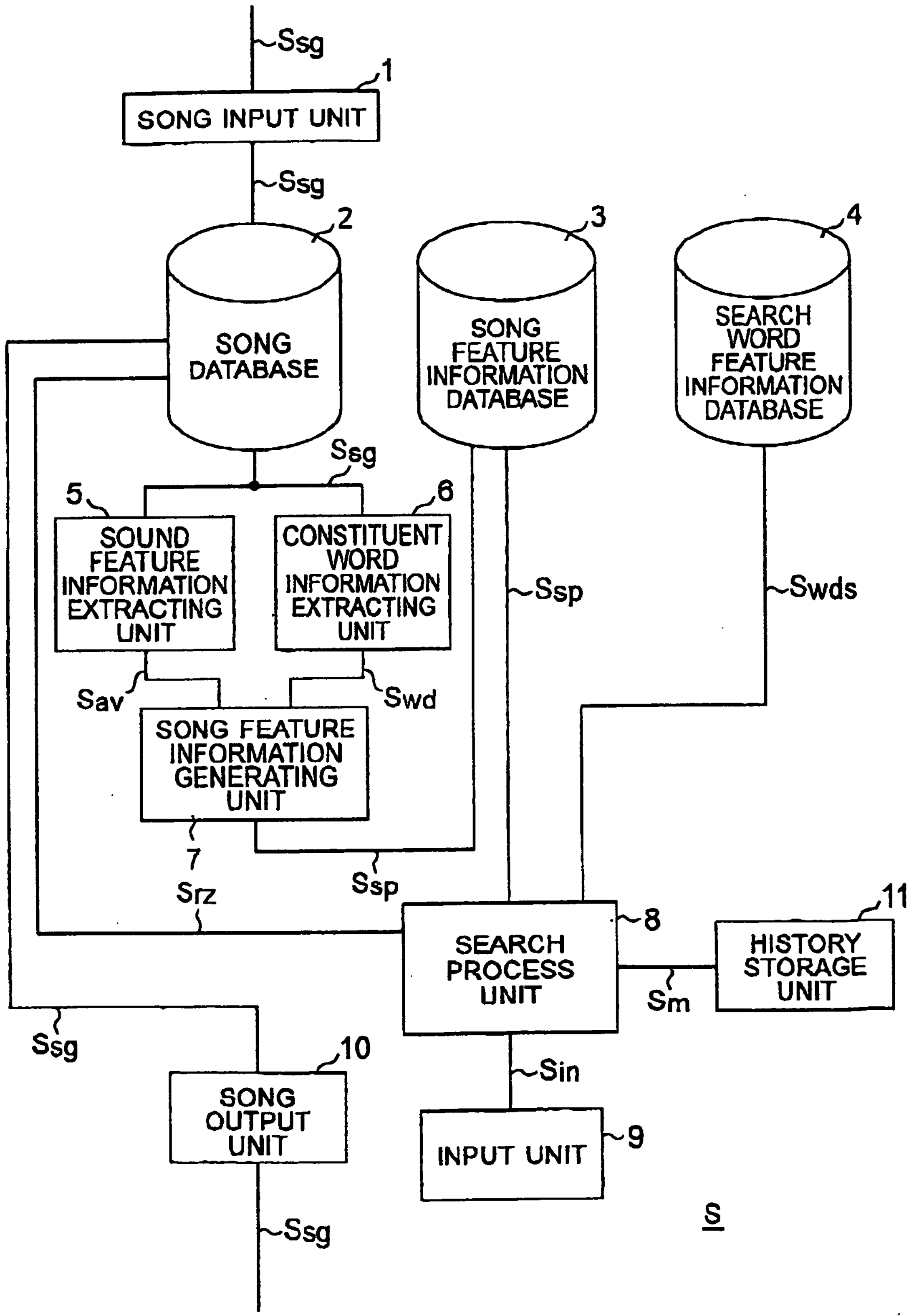
Ssg
1
SONG INPUT UNIT
Ssg
2
SONG DATABASE
3
SONG FEATURE INFORMATION DATABASE
4
SEARCH WORD FEATURE INFORMATION DATABASE
Ssg
5
SOUND FEATURE INFORMATION EXTRACTING UNIT
6
CONSTITUENT WORD INFORMATION EXTRACTING UNIT
Ssp
Swds
Sav
Swd
SONG FEATURE INFORMATION GENERATING UNIT
7
Srz
Ssp
8
SEARCH PROCESS UNIT
11
HISTORY STORAGE UNIT
Sm
Ssg
10
SONG OUTPUT UNIT
Sin
INPUT UNIT
9
Ssg
S

# FIG. 2A

| SONG NO. | CONSTITUENT WORD | | | | | SOUND FEATURE INFORMATION | | | | |
|---|---|---|---|---|---|---|---|---|---|---|
| | LOVE | SEA | THOUGHT | HOPE | ••• | BPM | MAXIMUM LEVEL | AVERAGE LEVEL | ••• | |
| 0 | 1 | 0 | 0 | 0 | | 129 | 234 | 123 | | 20 |
| 1 | 1 | 1 | 0 | 1 | | 189 | 345 | 231 | | 20 |
| 2 | 0 | 0 | 1 | 0 | | 80 | 123 | 88 | | |
| 3 | 0 | 0 | 0 | 1 | | 150 | 334 | 298 | | |
| 4 | 1 | 1 | 1 | 0 | | 102 | 235 | 150 | | |
| 5 | 0 | 1 | 1 | 0 | | 86 | 198 | 75 | | |
| ⋮ | ⋮ | ⋮ | ⋮ | ⋮ | ⋮ | ⋮ | ⋮ | ⋮ | ⋮ | |

# FIG. 2B

| SEARCH ID | SEARCH WORD | LYRIC FEATURE INFORMATION | | | | SOUND FEATURE INFORMATION | | | | |
|---|---|---|---|---|---|---|---|---|---|---|
| | | HEART-WARMING | CHEERFUL | SAD, LONELY | HEARTENING | BPM | MAXIMUM LEVEL | AVERAGE LEVEL | ••• | |
| 0 | HEART-WARMING | 0.9 | 0 | 0.1 | 0.3 | 129 | 234 | 123 | | 30 |
| 1 | CHEERFUL | 0.2 | 0.7 | 0 | 0.5 | 189 | 345 | 231 | | 30 |
| 2 | SAD, LONELY | 0.3 | 0 | 0.8 | 0 | 80 | 123 | 88 | | |
| 3 | HEARTENING | 0 | 0 | 0.3 | 0.9 | 150 | 334 | 298 | | |
| 4 | QUIET | 0 | 0.7 | 0.5 | 0.1 | 102 | 235 | 150 | | |
| ⋮ | ⋮ | ⋮ | ⋮ | ⋮ | ⋮ | ⋮ | ⋮ | ⋮ | ⋮ | |

FIG. 2C

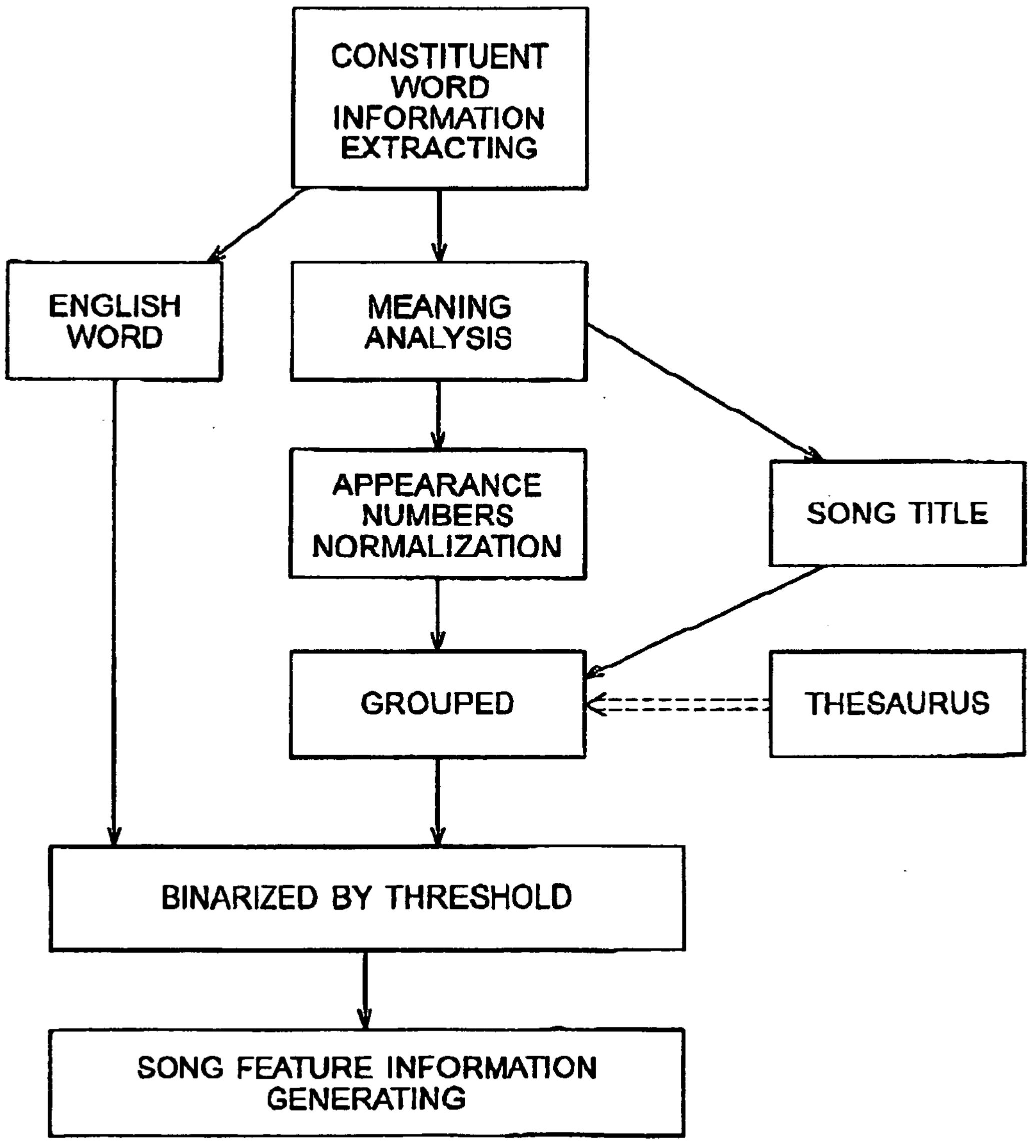
CONSTITUENT WORD INFORMATION EXTRACTING
ENGLISH WORD
MEANING ANALYSIS
APPEARANCE NUMBERS NORMALIZATION
SONG TITLE
GROUPED
THESAURUS
BINARIZED BY THRESHOLD
SONG FEATURE INFORMATION GENERATING

FIG. 3

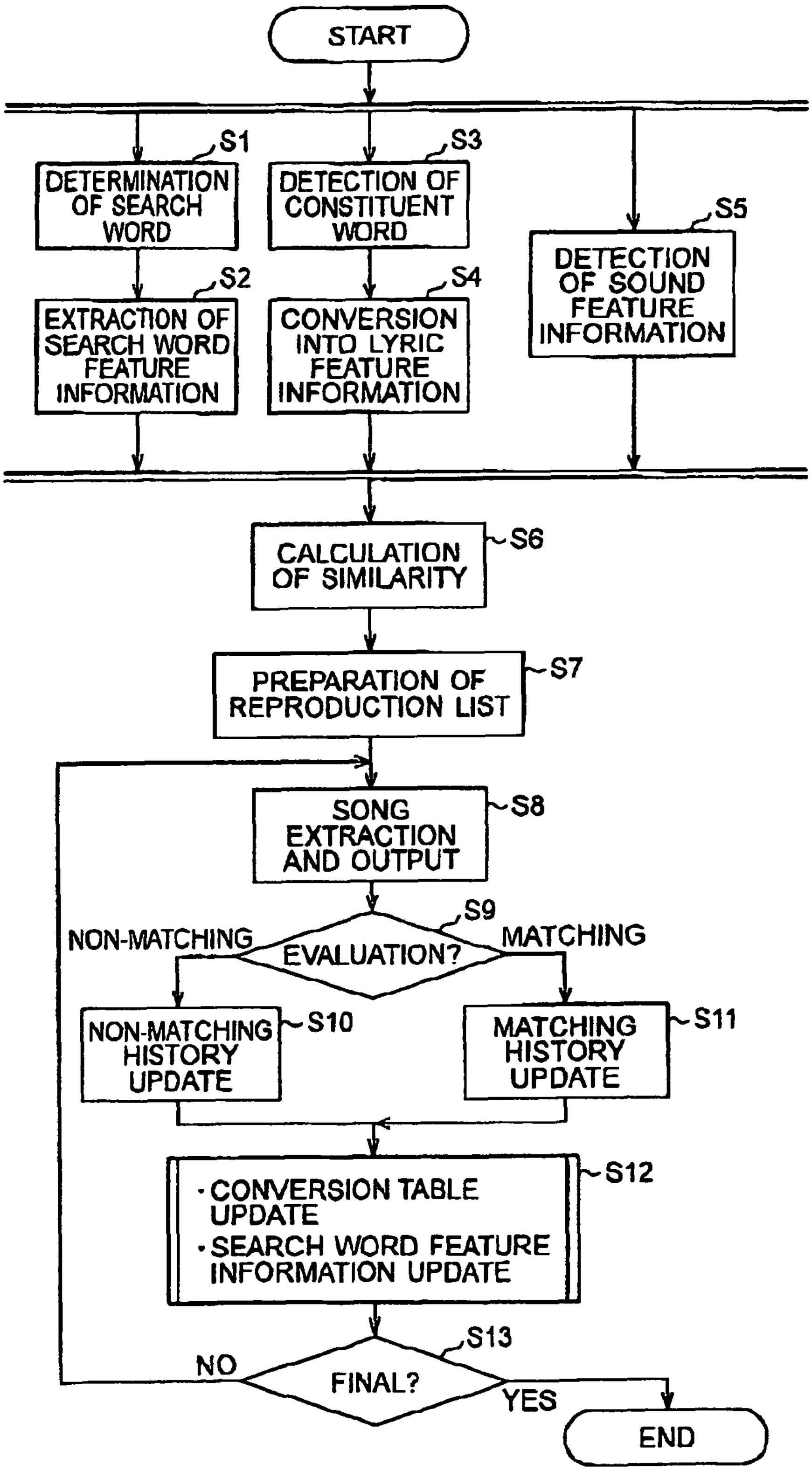
START
S1
DETERMINATION OF SEARCH WORD
S2
EXTRACTION OF SEARCH WORD FEATURE INFORMATION
S3
DETECTION OF CONSTITUENT WORD
S4
CONVERSION INTO LYRIC FEATURE INFORMATION
S5
DETECTION OF SOUND FEATURE INFORMATION
S6
CALCULATION OF SIMILARITY
S7
PREPARATION OF REPRODUCTION LIST
S8
SONG EXTRACTION AND OUTPUT
S9
EVALUATION?
NON-MATCHING
MATCHING
S10
NON-MATCHING HISTORY UPDATE
S11
MATCHING HISTORY UPDATE
S12
· CONVERSION TABLE UPDATE
· SEARCH WORD FEATURE INFORMATION UPDATE
S13
FINAL?
NO
YES
END

FIG. 4

| LYRIC FEATURE INFORMATION | CONSTITUENT WORD | | | | |
|---|---|---|---|---|---|
| | LOVE | SEA | THOUGHT | HOPE | ··· |
| HEART-WARMING | 0 | 0.1 | 0.1 | 0.4 | ··· |
| CHEERFUL | 0.2 | 0.1 | 0.8 | 0.1 | ··· |
| SAD, LONELY | 0 | 0.2 | 0 | 0.7 | ··· |
| HEARTENING | 0.5 | 0.4 | 0 | 0.8 | ··· |

FIG. 5A

| NO. | CONSTITUENT WORD (20) | | | | | SOUND FEATURE INFORMATION (20) | | | | LYRIC FEATURE INFORMATION (40) | | | |
|---|---|---|---|---|---|---|---|---|---|---|---|---|---|
| | LOVE | SEA | THOUGHT | HOPE | ··· | BPM | MAXIMUM LEVEL | AVERAGE LEVEL | ··· | HEART-WARMING | CHEERFUL | SAD, LONELY | HEARTENING |
| 0 | 0 | 1 | 0 | 0 | | 129 | 234 | 123 | | 0.9 | 0.1 | 0 | 0 |
| 1 | 1 | 1 | 0 | 1 | | 189 | 345 | 231 | | 0.3 | 0 | 0.5 | 0.4 |
| 3 | 0 | 0 | 0 | 0 | | 80 | 123 | 88 | | 0 | 0.7 | 0.7 | 0.8 |
| 5 | 0 | 1 | 0 | 1 | | 150 | 334 | 298 | | 0 | 0 | 0 | 0 |
| 8 | 1 | 0 | 0 | 0 | | 102 | 235 | 150 | | 0.1 | 0 | 0.3 | 0.1 |

G

FIG. 5B

| NO. | CONSTITUENT WORD (20) | | | | | SOUND FEATURE INFORMATION (20) | | | | LYRIC FEATURE INFORMATION (40) | | | |
|---|---|---|---|---|---|---|---|---|---|---|---|---|---|
| | LOVE | SEA | THOUGHT | HOPE | ··· | BPM | MAXIMUM LEVEL | AVERAGE LEVEL | ··· | HEART-WARMING | CHEERFUL | SAD, LONELY | HEARTENING |
| 2 | 0 | 1 | 0 | 0 | | 129 | 234 | 123 | | 0.2 | 0 | 0 | 0.3 |
| 4 | 1 | 0 | 1 | 1 | | 189 | 345 | 231 | | 0 | 0.4 | 0.1 | 0 |
| 6 | 0 | 0 | 0 | 0 | | 80 | 123 | 88 | | 0 | 0 | 0.9 | 0.6 |
| 7 | 0 | 0 | 0 | 1 | | 150 | 334 | 298 | | 0.4 | 0 | 0 | 0 |

NG

FIG. 6

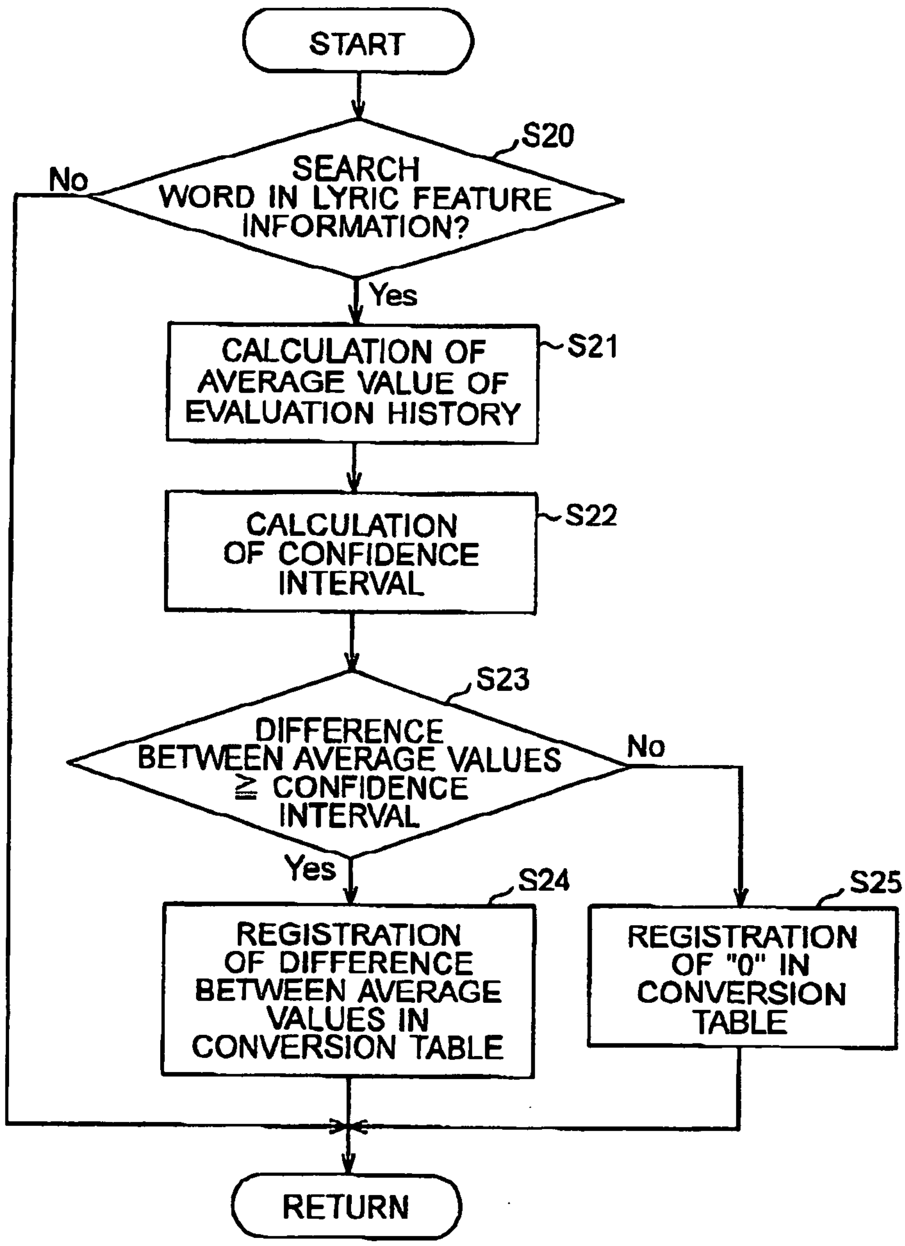
START
SEARCH WORD IN LYRIC FEATURE INFORMATION?
S20
No
Yes
CALCULATION OF AVERAGE VALUE OF EVALUATION HISTORY
S21
CALCULATION OF CONFIDENCE INTERVAL
S22
DIFFERENCE BETWEEN AVERAGE VALUES ≧ CONFIDENCE INTERVAL
S23
No
Yes
REGISTRATION OF DIFFERENCE BETWEEN AVERAGE VALUES IN CONVERSION TABLE
S24
REGISTRATION OF "0" IN CONVERSION TABLE
S25
RETURN

# FIG. 7

| SEARCH WORD 'HEART-WARMING' | | | | | | | | | | | |
|---|---|---|---|---|---|---|---|---|---|---|---|
| MATCHING HISTORY INFORMATION | | | | | | NON-MATCHING HISTORY INFORMATION | | | | | |
| STORAGE ADDRESS | CONSTITUENT WORD | | | | | STORAGE ADDRESS | CONSTITUENT WORD | | | | |
| | LOVE | SEA | THOUGHT | HOPE | ··· | | LOVE | SEA | THOUGHT | HOPE | ··· |
| 0 | 0 | 1 | 0 | 0 | | 0 | 1 | 0 | 0 | 1 | |
| 1 | 0 | 1 | 1 | 0 | | 1 | 1 | 1 | 1 | 1 | |
| 2 | 0 | 1 | 1 | 0 | | 2 | 0 | 1 | 0 | 0 | |
| 3 | 0 | 1 | 0 | 0 | | 3 | 1 | 1 | 0 | 0 | |
| 4 | 1 | 1 | 0 | 0 | | 4 | 1 | 0 | 1 | 1 | |
| 5 | 1 | 1 | 0 | 0 | | 5 | 0 | 0 | 0 | 0 | |
| 6 | 0 | 1 | 0 | 0 | | 6 | 1 | 1 | 0 | 1 | |
| 7 | 1 | 0 | 0 | 1 | | 7 | 1 | 0 | 0 | 0 | |
| 8 | 0 | 1 | 0 | 1 | | 8 | 1 | 1 | 1 | 0 | |
| 9 | 1 | 1 | 0 | 0 | | 9 | 1 | 0 | 0 | 1 | |
| 10 | 0 | 1 | 0 | 0 | | 10 | 0 | 1 | 0 | 0 | |
| 11 | 0 | 0 | 1 | 0 | | 11 | 1 | 1 | 0 | 0 | |
| 12 | 0 | 1 | 0 | 0 | | 12 | 1 | 0 | 0 | 0 | |
| 13 | 0 | 1 | 0 | 0 | | 13 | 1 | 1 | 1 | 1 | |
| 14 | 0 | 1 | 0 | 0 | | 14 | 0 | 1 | 0 | 0 | |
| 15 | 0 | 1 | 0 | 0 | | 15 | 0 | 0 | 1 | 0 | |
| 16 | 0 | 1 | 0 | 0 | | 16 | 1 | 0 | 0 | 0 | |
| 17 | 0 | 1 | 1 | 0 | | 17 | 1 | 1 | 0 | 1 | |
| 18 | 1 | 0 | 0 | 0 | | 18 | 1 | 1 | 0 | 0 | |
| 19 | 0 | 1 | 0 | 0 | | 19 | 0 | 1 | 0 | 0 | |
| AA | 0.25 | 0.85 | 0.20 | 0.10 | | DA | 0.70 | 0.60 | 0.25 | 0.35 | |
| AA−DA | −0.45 | 0.25 | −0.05 | −0.25 | | | | | | | |
| CONFIDENCE INTERVAL | 0.32 | 0.26 | 0.30 | 0.22 | | | | | | | |
| CONVERSION TABLE OF LYRIC FEATURE VALUE 'HEART-WARMING' | −0.45 | 0.00 | 0.00 | −0.25 | | | | | | | |

~T

# FIG. 8

SEARCH WORD 'HEART-WARMING'

MATCHING HISTORY INFORMATION

| STORAGE ADDRESS | CONSTITUENT WORD | | | | |
|---|---|---|---|---|---|
| | LOVE | SEA | THOUGHT | HOPE | ··· |
| 0 | 1 | 1 | 0 | 0 | |
| 1 | 0 | 1 | 1 | 0 | |
| 2 | 1 | 1 | 0 | 0 | |
| 3 | 0 | 0 | 0 | 0 | |
| 4 | 1 | 1 | 1 | 1 | |
| 5 | 0 | 1 | 0 | 0 | |
| 6 | 0 | 1 | 0 | 0 | |
| 7 | 0 | 0 | 0 | 0 | |
| 8 | 0 | 1 | 1 | 0 | |
| 9 | 0 | 1 | 0 | 1 | |
| 10 | 0 | 1 | 0 | 0 | |
| 11 | 0 | 0 | 1 | 0 | |
| 12 | 0 | 1 | 0 | 0 | |
| 13 | 0 | 1 | 0 | 0 | |
| 14 | 0 | 1 | 0 | 0 | |
| 15 | 0 | 1 | 0 | 0 | |
| 16 | 0 | 1 | 0 | 0 | |
| 17 | 0 | 1 | 1 | 0 | |
| 18 | 1 | 0 | 0 | 0 | |
| 19 | 0 | 1 | 0 | 0 | |
| AA | 0.20 | 0.80 | 0.25 | 0.10 | |
| AA-DA | -0.20 | 0.35 | -0.05 | -0.10 | |
| CONFIDENCE INTERVAL | 0.30 | 0.30 | 0.32 | 0.22 | |
| CONVERSION TABLE OF LYRIC FEATURE VALUE 'HEART-WARMING' (T) | 0.00 | 0.35 | 0.00 | 0.00 | |

NON-MATCHING HISTORY INFORMATION

| STORAGE ADDRESS | CONSTITUENT WORD | | | | |
|---|---|---|---|---|---|
| | LOVE | SEA | THOUGHT | HOPE | ··· |
| 0 | 0 | 0 | 1 | 0 | |
| 1 | 0 | 1 | 0 | 0 | |
| 2 | 0 | 0 | 0 | 0 | |
| 3 | 0 | 0 | 1 | 1 | |
| 4 | 1 | 0 | 0 | 0 | |
| 5 | 0 | 0 | 0 | 0 | |
| 6 | 1 | 0 | 1 | 0 | |
| 7 | 0 | 1 | 0 | 0 | |
| 8 | 0 | 0 | 1 | 0 | |
| 9 | 0 | 0 | 0 | 1 | |
| 10 | 0 | 1 | 0 | 0 | |
| 11 | 1 | 1 | 0 | 0 | |
| 12 | 1 | 0 | 0 | 0 | |
| 13 | 1 | 1 | 1 | 1 | |
| 14 | 0 | 1 | 0 | 0 | |
| 15 | 0 | 0 | 1 | 0 | |
| 16 | 1 | 0 | 0 | 0 | |
| 17 | 1 | 1 | 0 | 1 | |
| 18 | 1 | 1 | 0 | 0 | |
| 19 | 0 | 1 | 0 | 0 | |
| DA | 0.40 | 0.45 | 0.30 | 0.20 | |